# FASCICULE DE BREVET EUROPEEN

(11) **EP 3 410 858 B1**
(45) Date de publication et mention de la délivrance du brevet: **14.08.2019**
(21) Numéro de dépôt: 17706697.4
(22) Date de dépôt: 02.02.2017
(51) Int. Cl.: A21C 9/04

(54) **SYSTÈME DE CONSERVATION ET DE DOSAGE D'INGRÉDIENTS ET PROCÉDÉ DE DOSAGE ET DE DÉPÔT D'INGRÉDIENTS SUR UN SUBSTRAT**
ANLAGE FÜR DIE ERHALTUNG UND DIE DOSIERUNG VON ZUTATEN UND VERFAHREN FÜR DIE DOSIERUNG UND DIE ABLAGERUNG VON ZUTATEN AUF EINEM SUBSTRAT
SYSTEM FOR THE CONSERVATION AND DOSAGE OF INGREDIENTS AND METHOD FOR THE DOSAGE AND DEPOSITION OF INGREDIENTS ON A SUBSTRATE

(30) Priorité: 03.02.2016 FR 1650852
(43) Date de publication de la demande: 12.12.2018
(73) Titulaire: Ekim, 77144 Montevrain (FR)
(72) Inventeur: HAMON, Cyrill, 77144 Montevrain (FR); ROVERSO, Sébastien, 77144 Chalifert (FR); CALVARIN, Faustine, 77184 Emerainville (FR)
(74) Mandataire: IPAZ
(86) Numéro de dépôt international: PCT/EP2017/052233
(87) Numéro de publication internationale: WO 2017/134153

(56) Documents cités:
- US-A- 4 152 976
- US-A- 4 202 260
- US-A- 5 121 677
- US-A1- 2002 022 071
- US-A1- 2003 183 164
- US-A1- 2004 238 555
- US-A1- 2005 178 277

## Description

### Domaine technique

La présente invention concerne un système de conservation et de dosage d'ingrédients, ainsi qu'un procédé de dosage et de dépôt d'ingrédients sur un substrat.

La présente invention se situe dans le domaine de la conservation de denrées alimentaires utilisées dans des procédés artisanaux ou semi-industriels, et plus particulièrement le domaine de la confection automatisée de préparations culinaires à partir de ces denrées alimentaires.

### Etat de la technique antérieure

De manière connue, on connait des chambres de stockage qui permettent de conserver des denrées alimentaires durant de longues périodes grâce à des températures de conservation abaissées afin de ralentir voire empêcher le développement microbien et bactérien desdites denrées alimentaires qui y sont stockées. Il peut s'agir par exemple de réfrigérateurs, de chambres froides ou de congélateurs selon les températures de conservation choisies.

Les ingrédients sont déposés dans la chambre de stockage, éventuellement à l'intérieur de compartiments afin d'optimiser leur rangement.

On connait aussi des automates fabriquant des préparations culinaires - par exemple des pizzas - et mettant en oeuvre des réservoirs de stockage couplés à des dispositifs de prélèvement afin de prélever en quantité prédéterminée une partie des ingrédients conservés dans les réservoirs de stockage. Chaque réservoir de stockage est alors doté d'un mécanisme d'ouverture et de fermeture motorisé afin de permettre l'extraction de la quantité prévue d'ingrédients.

L'inconvénient des systèmes mis en oeuvre dans de tels automates est la limitation du nombre de recettes différentes pouvant généralement être obtenues. En effet, un compromis doit généralement être fait entre le nombre de réservoirs de stockage et la diversité des recettes possibles. Selon une première variante, chaque réservoir peut contenir l'ensemble des ingrédients nécessaires à la confection d'une recette donnée de pizza, c'est-à-dire de pizzas confectionnées à partir de types donnés d'ingrédients. Une pâte à pizza abaissée peut alors être placée sous le réservoir de la recette sélectionnée, afin de recevoir simultanément l'ensemble des ingrédients de cette recette. Le nombre de réservoirs de stockage nécessaires est alors au moins égal au nombre de recettes que l'on souhaite pouvoir obtenir.

Selon une deuxième variante, chaque réservoir contient un nombre restreint de type d'ingrédient, voire un unique type d'ingrédients. La confection de recettes variées implique alors de disposer d'autant de réservoirs que de types d'ingrédients composant les différentes recettes. Un inconvénient de cette deuxième variante est que la pâte à pizza abaissée doit alors être déplacée sous chaque réservoir contenant l'un des ingrédients de la recette sélectionnée. Ces déplacements successifs entraînent la présence d'un système de manutention complexe et encombrant. En pratique, l'encombrement des réservoirs de stockage et du système de manutention implique de restreindre le nombre de réservoirs, afin de limiter les dimensions de la chambre froide, et donc son coût de fabrication et sa consommation énergétique lors de son utilisation. Par ailleurs, le déplacement de la pâte à pizza entre les différents réservoirs engendre une durée de dépose des ingrédients relativement longue au regard de la première variante. La durée globale de confection d'une pizza est alors allongée.

Enfin, pour un réservoir donné, le dépôt à la surface de la pâte à pizza abaissée de la quantité prédéterminée d'ingrédients est généralement réalisé par un système complexe de déplacement relatif dudit réservoir par rapport à la pâte à pizza abaissée : soit c'est la pâte à pizza abaissée qui est placée sur un chariot mobile qui se déplace sous le réservoir déversant les ingrédients, soit c'est le réservoir qui se déplace au-dessus de la pâte à pizza abaissée. L'inconvénient de ce système de dépôt est qu'il est complexe à mettre en oeuvre et consomme aussi de l'énergie pour assurer le déplacement relatif de la pizza par rapport au réservoir duquel les ingrédients sont déversés. Par ailleurs, pour un déplacement relatif programmé donné, le dépôt desdits ingrédients sera reproductible et de tels systèmes ne sont donc pas compatibles avec la confection automatisée de pizzas semi-traditionnelles pour lesquelles les ingrédients ne sont pas posés de manière totalement reproductible d'une pizza à l'autre.

Les documents US 4202260 A, US 2004/238555 A1, US 5121677 A, US 2003/183164 A1, US 4152976 A, US 2005/178277 A1 et US 2002/022071 A1 divulguent un système de conservation et de dosage d'ingrédients et un procédé de dosage et de dépôt d'ingrédients sur un substrat selon l'état de la technique.

La présente invention a pour objet de répondre au moins en partie aux problèmes précédents et de conduire en outre à d'autres avantages.

Un autre but de l'invention est de résoudre au moins un de ces problèmes par un nouveau système de conservation et de dosage d'ingrédients.

Un autre but de la présente invention est de faciliter la gestion d'un congélateur et notamment l'approvisionnement et la conservation des denrées alimentaires.

Un autre but de la présente invention est d'automatiser l'extraction des denrées alimentaires conservées.

Un autre but de la présente invention est de réduire les consommations énergétiques et les dimensions d'une chambre de conservation.

Un autre but de la présente invention est de pouvoir sélectionner précisément le type et les quantités de denrées alimentaires extraites.

Un autre but est d'accélérer et de simplifier le dépôt des denrées alimentaires sur un substrat.

Un autre but de la présente invention est de pouvoir déposer des denrées alimentaires de manière homogène et aléatoire sur un substrat au cours d'une unique opération.

### Exposé de l'invention

Selon un premier aspect de l'invention, on atteint au moins l'un des objectifs précités avec un système de conservation et de dosage d'ingrédients selon la revendication 1.

La chambre de conservation peut comprendre des moyens de réfrigération permettant de maintenir une température à l'intérieur de la chambre inférieure à 15°C ou de maintenir des conditions de stockage à sec. De manière préférentielle, les moyens de réfrigération permettent de maintenir une température à l'intérieur de la chambre inférieure à 4°C afin de ralentir ou stopper les croissances bactériennes et de ralentir les réactions chimiques indésirables sur les ingrédients conservés.

Selon un mode de réalisation préféré, la chambre de conservation comprend des moyens de congélation agencés pour la maintenir à une température inférieure à 0°C, et de préférence à une température comprise entre -18°C et -30°C.

La chambre de conservation mise en oeuvre dans le premier aspect de l'invention comprend une pluralité de compartiments dans lesquels les ingrédients sont conservés. Les compartiments sont disposés à l'intérieur de la chambre de conservation de manière à ce que le dispositif de prélèvement puisse se positionner à proximité de chaque compartiment pour en prélever une quantité prédéterminée.

De manière générale, chaque compartiment peut prendre la forme d'un réceptacle cylindrique dont les dimensions sont adaptées à la conservation d'ingrédients préférentiellement coupés en morceaux et « prêts à l'emploi » dans une préparation culinaire. A titre d'exemple non limitatif, le volume de chaque compartiment peut être compris entre 0,5 litres et cent litres.

Selon les préparations culinaires préparées, les ingrédients conservés peuvent être de n'importe quel type : poissons, fruits et/ou légumes prédécoupés, viandes, céréales, fromages prédécoupés et/ou râpés, confiseries, morceaux de sauces et, d'une manière générale, tout type de produits alimentaires utilisés dans la confection de préparations culinaires (farines, fruits et légumes transformés ou non, morceaux de chocolat, de sucre, de caramel...)

Chaque compartiment peut comprendre un moyen d'obturation - au moins partiel - agencé pour permettre selon une première configuration de retenir tous les ingrédients contenus dans ledit compartiment et, selon une deuxième configuration, d'autoriser le prélèvement d'au moins une partie des ingrédients contenus dans ledit compartiment par le dispositif de prélèvement et de dosage. A titre d'exemple non limitatif, le moyen d'obturation peut consister en une trappe amovible disposée au niveau d'une extrémité inférieure du compartiment. Le moyen d'obturation peut également comporter deux volets pivotants s'ouvrant en vis-à-vis, ou un diaphragme. Selon une forme particulière de réalisation, le moyen d'obturation fait partie du dispositif de prélèvement et de dosage. Le dispositif de prélèvement et de dosage comporte par exemple un mécanisme du type vis sans fin. Ce mécanisme peut alors remplir la fonction d'obturation, en particulier lorsque l'ouverture du compartiment est située à une extrémité d'un axe de révolution de la vis.

De préférence, chaque compartiment est rempli avec un unique type d'ingrédient afin de pouvoir gérer leur approvisionnement de manière plus facile et plus précise en fonction de leur prélèvement et de leur consommation et ainsi proposer des plats personnalisés. Dans ce cas, la chambre de conservation peut comprendre un grand nombre de compartiments arrangés dans la chambre de conservation. Il est ainsi plus facile d'anticiper le réapprovisionnement des ingrédients. Par ailleurs, dans le cas où une partie des ingrédients conservés dans la chambre de conservation serait contaminée ou impropre à la consommation, il est alors possible de les jeter et de les remplacer en conservant les autres ingrédients qui ne sont pas contaminés et/ou impropres à la consommation. D'une manière plus générale, la chambre de conservation mise en oeuvre dans le premier aspect de l'invention permet une meilleure gestion sanitaire des ingrédients conservés.

Eventuellement, selon un mode de réalisation particulier, chaque compartiment peut être hermétique afin de réduire encore les risques de contamination entre compartiments.

A titre d'exemple non limitatif, la chambre de conservation mise en oeuvre dans le premier aspect de l'invention peut comprendre entre 2 et 200 compartiments.

De manière avantageuse, l'espace situé devant chaque compartiment est suffisant pour permettre le déplacement du dispositif de prélèvement.

Eventuellement la chambre de conservation comprend une porte permettant d'une part un accès aisé et simultané à tous les compartiments pour faciliter leur remplissage et/ou les opérations de maintenance, et d'autre part la fermeture hermétique de ladite chambre de conservation afin de limiter les pertes thermiques.

Eventuellement, la chambre de conservation comprend aussi une pluralité de trappes de remplissage situées sur les parois latérales extérieures, chacune des trappes de remplissage permettant de remplir et/ou nettoyer un ou plusieurs compartiments juxtaposés sans ouvrir l'éventuelle porte de la chambre de conservation. Accessoirement, un conduit de remplissage peut relier chaque compartiment à la trappe de remplissage à laquelle il est associé, en fonction de l'épaisseur de la paroi latérale de la chambre de conservation et/ou de la position dudit compartiment dans la chambre de conservation. Il est ainsi possible de réaliser l'approvisionnement en ingrédients tout en limitant les pertes thermiques, la consommation énergétique et les coûts d'utilisation de la chambre de conservation.

D'une manière générale, les compartiments sont préférentiellement agencés à l'intérieur de la chambre de conservation de manière à ce que le dispositif de prélèvement puisse se déplacer dans au moins une direction pour collaborer avec chaque compartiment et prélever la quantité prédéterminée d'ingrédients.

Selon un mode de réalisation avantageux, le dispositif de prélèvement est agencé pour se déplacer selon deux directions perpendiculaires dans la chambre de conservation, ou encore selon trois directions perpendiculaires.

Conformément au premier aspect de l'invention, le dispositif de prélèvement et de dosage des ingrédients est apte à se déplacer successivement à l'aplomb ou à proximité de chaque compartiment. Le déplacement est assuré par un mécanisme de convoyage agencé pour assurer un déplacement selon un, deux ou trois axes, successivement ou simultanément, à l'intérieur de la chambre de conservation, selon l'organisation des compartiments à l'intérieur de celle-ci.

Le mécanisme de convoyage peut comprendre un système de guidage suivant un, deux ou trois axes afin de guider le dispositif de prélèvement et de dosage vers n'importe lequel des compartiments présents dans la chambre de conservation. Un actionneur placé sur chacun des axes de déplacement permet de contrôler indépendamment le déplacement du dispositif selon chaque axe.

L'unité de commande est programmée pour contrôler notamment au moins un actionneur du mécanisme de convoyage.

Pour un déplacement du dispositif de prélèvement suivant un seul axe à l'intérieur de la chambre de conservation, le mécanisme de convoyage peut comprendre par exemple un premier rail de guidage, dit primaire, orienté préférentiellement dans la direction de la plus grande dimension intérieure de la chambre de conservation et par exemple fixé solidairement sur une paroi de la chambre de conservation. Un élément mobile motorisé, dit primaire, est monté en liaison glissière avec le rail de guidage primaire.

Dans cette configuration, tous les compartiments sont préférentiellement alignés suivant une seule direction parallèle à la direction du premier rail de guidage à l'intérieur de la chambre de conservation, de manière à ce que le dispositif de prélèvement des ingrédients puisse s'arrêter à proximité de chaque compartiment afin d'en prélever une quantité prédéterminée d'ingrédients.

Pour un déplacement du dispositif de prélèvement suivant deux axes à l'intérieur de la chambre de conservation, le premier rail de guidage primaire peut être associé à un second rail de guidage primaire, disposé préférentiellement sur la face opposée à celle sur laquelle le premier rail de guidage primaire est fixé et orienté dans une direction parallèle à celle du premier rail de guidage primaire. Le second rail de guidage primaire comprend alors un second élément mobile primaire, en liaison glissière avec ledit second rail de guidage primaire. Eventuellement, le second élément mobile primaire peut être motorisé.

Les deux éléments mobiles primaires sont alors reliés entre eux par un autre rail de guidage, dit secondaire, orienté sensiblement dans une direction perpendiculaire à celle des rails de guidage primaires. Ainsi, lorsque l'au moins un élément mobile primaire motorisé est actionné, il entraine en translation le rail secondaire suivant la direction des rails de guidage primaires. Un élément mobile motorisé, dit secondaire, est monté en liaison glissière sur le rail de guidage secondaire afin de réaliser la translation.

Dans cette configuration, tous les compartiments sont préférentiellement disposés suivant une pluralité de lignes et de colonnes sur une ou plusieurs faces intérieures de la chambre de conservation, de manière à ce que le dispositif de prélèvement des ingrédients puisse s'arrêter à proximité de chaque compartiment afin de prélever une quantité prédéterminée d'ingrédients.

Enfin, pour un déplacement du dispositif de prélèvement suivant trois axes à l'intérieur de la chambre de conservation, un rail de guidage tertiaire suivant une direction perpendiculaire aux rails de guidage primaire et secondaire peut être fixé sur l'élément mobile secondaire. Un élément mobile motorisé tertiaire est alors monté en liaison glissière sur le rail de guidage tertiaire de manière à générer un déplacement dans cette direction.

Dans cette configuration, le dispositif de prélèvement des ingrédients peut ainsi se déplacer à l'intérieur de toute la chambre de conservation, offrant davantage de possibilités d'organisation des compartiments à l'intérieur de la chambre de conservation. De plus les capacités de stockage sont accrues. A titre d'exemple non limitatif, dans une telle configuration, la chambre de conservation pourrait accueillir des compartiments sur au moins deux faces opposées, voire sur toutes les parois intérieures de la chambre de conservation. Préférentiellement, les compartiments sont organisés suivant des lignes et des colonnes afin que le dispositif de prélèvement puisse s'arrêter à proximité de chaque compartiment et prélever une quantité prédéterminée d'ingrédients.

L'unité de commande est programmée pour contrôler les déplacements de l'au moins un élément mobile motorisé afin de le positionner notamment à proximité d'au moins une partie des compartiments afin d'y prélever une quantité prédéterminée d'ingrédients, la quantité d'ingrédients prélevée pouvant être différente selon les compartiments.

Pour toutes les configurations évoquées précédemment, la position des éléments mobiles le long du rail de guidage correspondant ainsi que la position de chaque compartiment peuvent être déterminée par étalonnage. Eventuellement, la position de chaque élément mobile le long de chaque rail de guidage peut être mesurée à l'aide de capteurs installés dans la chambre de conservation ou de codeurs embarqués sur lesdits éléments mobiles.

Le dispositif de prélèvement comprend un bac récupérateur apte à stocker temporairement les ingrédients prélevés de chaque compartiment sélectionné. Ainsi, lorsqu'une commande de prélèvement est envoyée par le contrôleur audit dispositif de prélèvement, par exemple en fonction d'une recette prédéterminée, le mécanisme de convoyage déplace de manière séquentielle le bac récupérateur à proximité de chaque compartiment comprenant un ingrédient de la commande de prélèvement et/ou de la recette prédéterminée. Le bac récupérateur peut notamment être positionné à l'aplomb de chaque compartiment ou, plus précisément, à l'aplomb de l'orifice de sortie de chaque compartiment. Pour chaque compartiment, le dispositif de prélèvement réalise un couplage entre le bac récupérateur et le compartiment afin de prélever la quantité prédéterminée d'ingrédients. Les modalités de ce couplage seront décrites plus loin. Lorsque le prélèvement des ingrédients contenus dans un compartiment est terminé, le dispositif de prélèvement découple le bac récupérateur dudit compartiment et se déplace jusqu'au prochain compartiment sélectionné. Ainsi, pour une commande de prélèvement donnée et/ou une recette donnée, tous les ingrédients sont prélevés au cours d'un même cycle de prélèvement comprenant une pluralité d'étapes de prélèvement.

De manière avantageuse, le bac récupérateur comprend aussi un moyen de vidange motorisé agencé pour prendre au moins deux configurations : une première configuration dite fermée permettant de retenir tous les ingrédients contenus dans le bac récupérateur, et une configuration dite ouverte permettant de vider le bac récupérateur de tous les ingrédients. Le moyen de vidange motorisé est préférentiellement situé sur une face inférieure du bac récupérateur afin que les ingrédients qu'il contient soient évacués sous le simple effet de la gravité. A titre d'exemples non limitatifs, le moyen de vidange peut comprendre au moins une trappe amovible motorisée, un diaphragme motorisé, un mécanisme à ressort ou à aimant avec ouverture et/ou fermeture par butée mécanique ou tout autre mécanisme équivalent.

Il est ainsi possible d'automatiser le prélèvement des ingrédients conservés dans la chambre de conservation et de pouvoir sélectionner précisément le type et les quantités d'ingrédients prélevés.

De manière préférentielle, le dispositif de prélèvement et de dosage d'ingrédients du système de conservation conforme au premier aspect de l'invention comprend par ailleurs un dispositif pour mesurer le poids et/ou le volume des ingrédients en cours de prélèvement, l'unité de commande étant programmée pour stopper le prélèvement des ingrédients d'un compartiment lorsque la quantité prédéterminée d'ingrédients a été prélevée.

A titre d'exemples non limitatifs, le dispositif pour mesurer le poids des ingrédients en cours de prélèvement peut être une balance fixée sous le bac récupérateur mesurant le poids instantané dudit bac récupérateur durant l'opération de prélèvement (et de remplissage dudit bac récupérateur). Typiquement, le capteur de poids est agencé et configuré pour mesurer le poids du bac récupérateur sur une période d'échantillonnage largement inférieure à la durée de prélèvement. Il est ainsi possible de déterminer la quantité d'ingrédients en cours d'extraction et de mieux déterminer les conditions d'arrêt de ladite extraction des ingrédients.

Alternativement ou complémentairement, un capteur de volume peut être mis en oeuvre sur le dispositif de prélèvement et de dosage des ingrédients extraits afin de déterminer le volume desdits ingrédients extraits. En effet, pour certaines préparations culinaires particulières, les proportions d'ingrédients nécessaires sont définies en termes de volumes plutôt que de poids.

Selon une configuration particulière, un tel capteur de volume peut comprendre par exemple une pluralité de diodes lasers agencées pour définir un peigne optique selon un plan de mesure sensiblement perpendiculaire à la direction de chute des ingrédients extraits. Chaque diode laser est par ailleurs couplée à un photodétecteur disposé en regard de sorte que lorsqu'un ingrédient est extrait d'un compartiment, il coupe le faisceau d'au moins une diode laser. En d'autres termes, l'ensemble de diodes laser et de photodétecteurs est agencé pour couvrir toute la surface de chute des ingrédients prélevés d'un compartiment vers le bac récupérateur.

Préférentiellement, la chute d'un ingrédient extrait vers le bac récupérateur coupe le faisceau d'au moins deux diodes lasers situées au maximum à 60° l'une de l'autre.

Les photodétecteurs sont par exemple agencés et configurés pour enregistrer l'intensité lumineuse émise par les diodes lasers situées en regard selon une fréquence d'échantillonnage suffisamment élevée pour enregistrer au moins dix mesures d'intensité par ingrédient extrait. A titre d'exemple non limitatif, la fréquence d'échantillonnage est au mois supérieur à 10 kHz.

Ainsi, chaque photodétecteur permet, par intégration des mesures réalisées pour un ingrédient extrait tombant dans le bac récupérateur, de calculer un volume infinitésimal dudit ingrédient calculé à partir de la largeur du faisceau optique et de la durée mesurée entre le franchissement du faisceau par une extrémité inférieure de l'ingrédient (correspondant à une atténuation soudaine de l'intensité lumineuse mesurée) et le franchissement de l'extrémité supérieure dudit ingrédient (correspondant à une ré-augmentation de l'intensité lumineuse mesurée).

Par combinaison des diodes laser et des photodétecteurs, il est ainsi possible de calculer le volume de chaque ingrédient ayant franchi le peigne optique.

A titre d'exemple, le calcul d'un volume infinitésimal peut être obtenu à partir des dimensions du photodétecteur et de la durée ainsi calculée au regard des courbes de variation de l'intensité lumineuse. Le volume total d'un ingrédient peut être calculé par la somme d'au moins une partie des volumes infinitésimaux.

De manière avantageuse, dans le système de conservation conforme au premier aspect de l'invention ou à l'un de ses perfectionnements, le mécanisme de convoyage est agencé pour pouvoir déplacer le bac récupérateur dans une configuration de déchargement, dans laquelle le bac récupérateur est situé à l'aplomb du substrat, et le bac récupérateur est aussi agencé pour pouvoir déposer sur ou dans le substrat les ingrédients prélevés des compartiments.

Il est ainsi possible de confectionner des préparations culinaires à partir d'une recette prédéfinie, et selon des ingrédients sélectionnés en quantités adaptées à ladite recette. Pour ce faire, le substrat de la préparation culinaire est placé sous le dispositif de prélèvement et de dosage dans la chambre de conservation, afin que les ingrédients contenus dans ledit dispositif de prélèvement et de dosage y soient déversés. Le substrat peut être comestible.

Le type de substrat varie selon la préparation culinaire concernée. Il peut s'agir par exemple d'une pâte à pain, d'une pâte sablée, d'une pâte brisée, d'une pâte feuilletée ou, de manière générale, de toute pâte apte à servir de support ou de liant pour les ingrédients. La pâte peut être abaissée, par exemple pour confectionner une pizza, ou foncée dans un moule, par exemple pour confectionner une quiche.

Le dispositif selon l'invention est aussi agencé pour préparer des recettes d'ingrédients consommés crus, par exemple au petit déjeuner, tels que des mélanges de céréales, des salades de fruits. Dans certains cas, le substrat peut ne pas être comestible : il peut s'agir par exemple de verres, de coupes, de bols ou d'assiettes.

Eventuellement, les différents substrats - comestibles ou non comestibles - sont stockés dans la chambre de conservation et transférés à la demande en-dessous du dispositif de prélèvement et de dosage afin d'y déposer les ingrédients prélevés et contenus dans ledit dispositif de prélèvement et de dosage par un mécanisme de convoyage.

Alternativement, les substrats sont importés « à la demande » dans la chambre de conservation par un mécanisme de convoyage en-dessous du dispositif de prélèvement et de dosage afin d'y déposer les ingrédients prélevés et contenus dans ledit dispositif de prélèvement et de dosage. Eventuellement, une trappe d'accès motorisée de la chambre de conservation permet de réaliser ce transfert et d'introduire le substrat dans la chambre de conservation ou d'extraire le substrat de la chambre de conservation. Dans sa configuration ouverte, elle permet au substrat d'être transféré sous le dispositif de prélèvement et de dosage de manière à y recevoir les ingrédients sélectionnés. Dans sa configuration fermée, la trappe d'accès garantit une fermeture étanche de la chambre de conservation afin de limiter les pertes énergétiques.

Lorsque le dispositif de prélèvement et de dosage a prélevé en quantités déterminées les ingrédients dans tous les compartiments sélectionnés pour la réalisation de ladite recette, le mécanisme de convoyage commandé déplace le dispositif de prélèvement et de dosage de manière à aligner verticalement le bac récupérateur et le substrat sur lequel les ingrédients sont déposés.

De manière plus générale, le dispositif de prélèvement est positionné au-dessus du substrat d'une manière telle que les ingrédients tombent sous l'effet de la gravité du bac récupérateur sur le substrat.

Comme évoqué précédemment, le dispositif de prélèvement et de dosage collabore avec chaque compartiment afin de prélever une quantité prédéterminée d'ingrédients. Cette collaboration peut être réalise selon trois modes de réalisation qui vont maintenant être décrits plus en détail.

Selon un premier mode de réalisation de l'invention conforme à l'un quelconque des perfectionnements, chaque compartiment peut comprendre :
- un élément d'extraction agencé pour pouvoir prélever une partie des ingrédients contenus dans ledit compartiment ;
- un organe moteur agencé pour pouvoir actionner l'élément d'extraction, notamment lorsqu'il collabore avec ledit dispositif de prélèvement et de dosage ;
le dispositif de prélèvement et de dosage étant configuré pour pouvoir prendre au moins deux configurations :
- une configuration dite couplée, dans laquelle le bac récupérateur est placé à l'aplomb de l'un des compartiments afin de collaborer avec ledit compartiment et pour pouvoir récupérer les ingrédients extraits;
- une configuration dite découplée dans laquelle le dispositif de prélèvement et de dosage est apte à se déplacer vers un autre compartiment et/ou vers la configuration de déchargement.

Selon ce premier mode de réalisation, chaque compartiment comprend les éléments qui permettent l'extraction contrôlée des ingrédients qu'ils contiennent. Il s'agit d'une part de l'élément d'extraction et de l'organe moteur qui commande l'élément d'extraction.

De manière générale, l'élément d'extraction peut prendre au moins les deux configurations suivantes.
- Une première configuration dite passante permettant d'extraire de manière contrôlée une partie des ingrédients contenus dans le compartiment correspondant. Selon le type d'élément d'extraction, la configuration passante peut être statique ou dynamique, selon si l'élément d'extraction est respectivement immobile ou en mouvement. A titre d'exemples non limitatifs, dans le cas où l'élément d'extraction comprend une vis dont une première partie est à l'intérieur du compartiment et une deuxième partie est à l'extérieur, la configuration passante est dynamique par la mise en rotation de la vis : à chaque tour de vis, une quantité donnée d'ingrédients est acheminée depuis l'intérieur du compartiment vers l'extérieur. Alternativement, une configuration passante est statique si l'élément d'extraction prend une position - immobile - dans laquelle une partie des ingrédients contenus dans le compartiment peut être extraite sans nécessiter de mouvement de l'élément d'extraction. A titre d'exemple non limitatif, il peut s'agir d'une trappe située sur la partie inférieure du compartiment. Lorsque la trappe est en configuration ouverte, les ingrédients contenus dans le compartiment peuvent tomber hors du compartiment sous le simple effet de la gravité. En réglant l'ouverture de la trappe, la vitesse d'extraction des ingrédients peut être contrôlée.
- Une deuxième configuration dite fermée permettant de retenir tous les ingrédients dans le compartiment.

L'organe moteur est agencé pour actionner l'élément d'extraction, d'une part pour le faire passer d'une configuration à une autre, et éventuellement pour actionner l'élément d'extraction dans la configuration passante dynamique. Il peut s'agir par exemple d'un moteur pas-à-pas agencé pour entrainer en rotation un arbre qui fait tourner une vis ou qui fait pivoter une trappe.

Dans ce premier mode de réalisation, le dispositif de prélèvement et de dosage est agencé pour collaborer avec chaque compartiment, préférentiellement l'un après l'autre. De manière générale, le dispositif de prélèvement et de dosage peut prendre deux configurations alternatives.
- Une première configuration dite couplée, dans laquelle le dispositif de prélèvement et de dosage est situé à proximité d'un compartiment afin d'autoriser l'extraction d'une partie des ingrédients contenus et de les récupérer dans le bac récupérateur. Dans cette configuration couplée, l'élément d'extraction peut être basculé de la configuration fermée à la configuration passante afin d'extraire une quantité prédéterminée d'ingrédients hors du compartiment. Lorsque la quantité prédéterminée est atteinte, l'élément d'extraction est rebasculé dans la configuration fermée. Eventuellement, dans cette configuration, le dispositif de prélèvement et de dosage établit une liaison temporaire et réversible avec le compartiment afin de réaliser un couplage mécanique et de conserver la position relative du dispositif de prélèvement par rapport audit compartiment durant l'extraction des ingrédients.
- Une deuxième configuration dite découplée, dans laquelle le dispositif de prélèvement est libre de se déplacer d'un compartiment à l'autre, ou éventuellement dans une autre configuration.

Selon un second mode de réalisation conforme à l'un quelconque des perfectionnements du premier aspect de l'invention, le dispositif de prélèvement et de dosage peut comprendre :
- un élément d'extraction agencé pour pouvoir collaborer successivement avec chaque compartiment de manière à extraire une partie des ingrédients contenus par le compartiment avec lequel l'élément d'extraction collabore ;
- un organe moteur agencé pour pouvoir actionner l'élément d'extraction lorsqu'il collabore avec l'un desdits compartiments ;
ledit dispositif de prélèvement et de dosage étant configuré pour pouvoir prendre au moins deux configurations :
- une configuration dite couplée dans laquelle l'élément d'extraction est couplé à l'un des compartiments afin d'en extraire une partie des ingrédients vers le bac récupérateur ;
- une configuration dite découplée dans laquelle l'élément d'extraction est découplé de chaque compartiment de manière à permettre au dispositif de prélèvement et de dosage de pouvoir se déplacer vers un autre compartiment et/ou vers la configuration de déchargement.

Selon ce second mode de réalisation, l'élément d'extraction et l'organe moteur ne sont plus intégrés sur chaque compartiment mais sont tous les deux mis en oeuvre sur le dispositif de prélèvement et de dosage afin de - conjointement - extraire de manière contrôlée les ingrédients contenus dans les compartiments.

Eventuellement, chaque compartiment peut comprendre en outre un moyen de fermeture agencé pour empêcher les ingrédients contenus dans ledit compartiment de tomber hors du compartiment lorsque ce dernier ne collabore par avec le dispositif de prélèvement et de dosage. Il peut s'agir par exemple d'un élément passif, comme une valve, ou dynamique comme une trappe motorisée.

De manière comparable au premier mode de réalisation, l'élément d'extraction situé sur le dispositif de prélèvement et de dosage peut prendre alternativement au moins une configuration passante - statique ou dynamique - et une configuration fermée.

De manière comparable au premier mode de réalisation, le dispositif de prélèvement et de dosage est agencé pour collaborer avec chaque compartiment, préférentiellement l'un après l'autre et au travers de deux configurations alternatives.
- Une première configuration dite couplée, dans laquelle le dispositif de prélèvement et de dosage établit une liaison temporaire et réversible avec le compartiment avec lequel il collabore. Dans cette configuration couplée, l'élément d'extraction peut être basculé de la configuration fermée à la configuration passante afin d'extraire une quantité prédéterminée d'ingrédients hors du compartiment. Lorsque la quantité prédéterminée est atteinte, l'élément d'extraction est rebasculé dans la configuration fermée.
- Une deuxième configuration dite découplée pour laquelle il n'y a plus de couplage entre le dispositif de prélèvement et de dosage et le compartiment, permettant éventuellement au dispositif de prélèvement et de dosage de se déplacer d'un compartiment à l'autre.

Ce mode de réalisation permet de manière astucieuse de limiter le nombre d'éléments mobiles et/ou moteurs nécessaires à l'extraction des ingrédients contenus dans les compartiments. Il permet aussi de faire des économies de coût de fabrication du système de conservation et de dosage selon l'invention.

Selon un troisième mode de réalisation de l'invention conforme à l'un quelconque de ses perfectionnements :
- chaque compartiment comprend un élément d'extraction agencé pour pouvoir collaborer avec le dispositif de prélèvement et de dosage et prélever une partie des ingrédients contenus dans ledit compartiment ;
- le dispositif de prélèvement et de dosage comprend un organe moteur agencé pour pouvoir collaborer successivement avec chaque compartiment de manière à pouvoir actionner l'élément d'extraction du compartiment avec lequel il collabore ;
ledit dispositif de prélèvement et de dosage étant configuré pour pouvoir prendre au moins deux configurations :
- une configuration dite couplée, dans laquelle l'organe moteur est couplé à l'élément d'extraction de l'un des compartiments de manière à pouvoir actionner l'élément d'extraction dudit compartiment et prélever une partie des ingrédients dudit compartiment vers le bac récupérateur ;
- une configuration dite découplée dans laquelle l'organe moteur est découplé de chaque élément d'extraction, de manière à permettre au dispositif de prélèvement et de dosage de se déplacer vers un autre compartiment et/ou vers la configuration de déchargement.

Ce troisième mode de réalisation constitue une configuration intermédiaire aux deux modes de réalisation précédemment décrits. En effet, dans ce mode de réalisation, un élément d'extraction est mis en oeuvre sur chaque compartiment tandis que l'organe moteur est mis en oeuvre de manière mutualisée sur le dispositif de prélèvement et de dosage.

De manière comparable aux premier et deuxième modes de réalisation, les éléments d'extraction situés sur chaque compartiment peuvent prendre alternativement au moins une configuration passante - statique ou dynamique - et une configuration fermée.

De manière comparable aux premier et second modes de réalisation, le dispositif de prélèvement et de dosage est agencé pour collaborer avec chaque compartiment, préférentiellement l'un après l'autre et au travers de deux configurations alternatives.
- Une première configuration dite couplée, dans laquelle le dispositif de prélèvement et de dosage établit une liaison temporaire et réversible entre l'organe moteur situé sur ledit dispositif de prélèvement et de dosage et l'élément d'extraction situé sur chaque compartiment. Une fois le couplage réalisé, l'élément d'extraction peut être basculé de la configuration fermée à la configuration passante afin d'extraire une quantité prédéterminée d'ingrédients hors du compartiment. Lorsque la quantité prédéterminée est atteinte, l'élément d'extraction est rebasculé dans la configuration fermée.
- Une deuxième configuration dite découplée pour laquelle il n'y a plus de couplage entre l'organe moteur du dispositif de prélèvement et de dosage et l'élément d'extraction du compartiment, permettant éventuellement au dispositif de prélèvement et de dosage de se déplacer d'un compartiment à l'autre.

Ce mode de réalisation permet astucieusement de simplifier la conception des compartiments et le fonctionnement du système de conservation et de dosage selon l'invention. En effet, la conservation des ingrédients à l'intérieur de chaque compartiment peut être entièrement assurée par l'élément d'extraction, solidaire desdits compartiments, et qui est basculé dans sa configuration passante uniquement lors du couplage avec l'organe moteur du dispositif de prélèvement, ledit élément d'extraction pouvant revenir dans sa configuration fermée une fois l'organe moteur découplé. Il est aussi possible de sélectionner et d'extraire des ingrédients hors de la chambre de conservation de manière plus rapide, permettant de confectionner des recettes à partir desdits ingrédients plus rapidement.

Eventuellement, l'élément d'extraction du système de conservation conforme au premier aspect de l'invention ou à l'un de ses perfectionnements peut comprendre un mécanisme du type vis sans fin, le mécanisme comprenant une vis dont la géométrie - notamment le pas de vis - et la vitesse de rotation permettent de contrôler la quantité et le débit d'extraction des ingrédients.

Cet élément d'extraction permet d'obtenir de manière très simple à la fois la configuration passante en faisant tourner la vis et la configuration fermée maintenant ladite vis dans une position donnée. En effet, dans le cas d'ingrédients non liquides contenus dans le compartiment, la position immobile de la vis permet de retenir les ingrédients et de les empêcher de tomber sous le simple effet de la gravité en dehors du compartiment.

Eventuellement, l'axe de rotation de la vis est incliné vers une face arrière du compartiment de sorte que, lorsque la vis est entrainée en rotation pour extraire les ingrédients contenus dans ledit compartiment (configuration de prélèvement), ceux-ci soient convoyés par la vis depuis une position située en contrebas dans le compartiment jusqu'à une position surélevée avant d'être expulsés hors dudit compartiment. Cet agencement de l'axe de rotation de la vis à l'intérieur du compartiment permet de mieux retenir les ingrédients lorsque ladite vis est au repos (configuration de stockage).

Préférentiellement, chaque compartiment comprend un tube interne enveloppant la partie frontale de la vis située à l'intérieur du compartiment.

Ce tube interne forme ainsi une voie pour le passage des ingrédients convoyés par la vis vers l'extérieur du compartiment.

Chaque compartiment peut comprendre, à la place ou en plus du tube interne, un élément d'obturation partielle situé au niveau d'un orifice de sortie du compartiment. Cet élément d'obturation peut présenter un diamètre d'ouverture inférieur au diamètre de la vis. Il est alors réalisé dans un matériau souple, de manière à pouvoir se déformer lors de la rotation de la vis. L'élément d'obturation comprend par exemple un ensemble de languettes s'étendant de manière concentrique depuis la périphérie de l'orifice de sortie. L'élément d'obturation partielle permet de limiter le volume d'ingrédients convoyés par la vis. Selon un second aspect de l'invention, il est proposé un dispositif de répartition, apte à être situé dans une position intercalaire entre un réservoir d'ingrédients situé au-dessus dudit dispositif de répartition et un substrat sur lequel les ingrédients doivent être déversés, et agencé de manière à permettre une répartition homogène et aléatoire sur ledit substrat des ingrédients passant au travers du dispositif de répartition.

De préférence, les ingrédients extraits du réservoir tombent au travers du dispositif de répartition sous le simple effet de la gravité, par exemple par l'ouverture d'une trappe située sur la partie inférieure dudit réservoir. De manière schématique, les ingrédients extraits du réservoir tombent - préférentiellement en chute libre - au travers du dispositif de répartition. Les ingrédients extraits du réservoir parviennent avec une énergie cinétique non nulle et dont les vecteurs vitesses sont principalement orientés suivant une direction verticale, les composantes transverses étant nulles ou largement inférieures aux composantes verticales.

Le dispositif de répartition est agencé pour modifier la trajectoire des ingrédients le traversant, de sorte qu'ils acquièrent une vitesse non nulle dans au moins une direction sensiblement transversale à la direction de la chute desdits ingrédients, conduisant ainsi à disperser transversalement et aléatoirement les ingrédients traversant ledit dispositif de répartition.

Avantageusement, le dispositif de répartition disperse latéralement les ingrédients le traversant de manière totalement passive, c'est-à-dire sans mettre en oeuvre d'éléments motorisés.

Complémentairement, le dispositif de répartition peut disperser les ingrédients dans une pluralité de directions transversales à la chute desdits ingrédients sans apport d'énergie supplémentaire à l'énergie mécanique accumulée par lesdits ingrédients en train de tomber.

De manière plus particulière, le dispositif de répartition des ingrédients peut comprendre un cylindre de mélange placé au-dessus du substrat - par exemple une pâte abaissée, un axe longitudinal du cylindre de mélange étant perpendiculaire à la surface du substrat, le cylindre de mélange comprenant, entre une extrémité supérieure et une extrémité inférieure, des obstacles agencés pour s'opposer à la libre chute des ingrédients, de manière à générer un déplacement latéral aléatoire des ingrédients pour les répartir aléatoirement et de manière homogène à la surface du substrat.

Les dimensions latérales du dispositif de répartition sont adaptées aux dimensions latérales du substrat sur lequel sont déposés les ingrédients, de manière à ce que tous les ingrédients traversant le dispositif de répartitions tombent finalement sur le substrat. Plus particulièrement, les dimensions extérieures du cylindre de mélange sont inférieures aux dimensions latérales extérieures du substrat sur lequel sont déposés les ingrédients. A titre d'exemple, dans le cas où le substrat est une pâte abaissée pour la préparation d'une pizza, le cylindre de mélange peut avantageusement prendre la forme d'un cylindre de révolution dont la courbe directrice est un cercle, le diamètre dudit cercle étant légèrement inférieur au diamètre de la pâte à pizza abaissée, par exemple de quelques pourcents.

Le dispositif de répartition met ainsi en oeuvre une série d'obstacles s'opposant à la libre chute des ingrédients le traversant. En fonction des dimensions et de l'orientation desdits obstacles d'une part, et des dimensions et du point d'impact de chaque ingrédient avec au moins un obstacle, la trajectoire de chaque ingrédient touchant un obstacle sera déviée dans une direction latérale aléatoire.

Les obstacles mis en oeuvre le long du cylindre de mélange sont agencés pour assurer une répartition homogène des ingrédients le traversant. Pour ce faire, les obstacles sont préférentiellement orientés selon une pluralité de directions - notamment radiales - de manière à ne pas favoriser une direction de rebond particulière.

Et préférentiellement, le dispositif de répartition des ingrédients peut comprendre par ailleurs un premier étage de répartition agencé pour disperser radialement autour de l'axe longitudinal les ingrédients provenant du réservoir ou du bac récupérateur, ledit premier étage de répartition étant situé au-dessus ou dans la partie supérieure du cylindre de mélange.

Avantageusement, le premier étage est réalisé dans une matière compatible avec les normes d'hygiène alimentaire, telle que par exemple de l'inox ou du polyoxyméthylène sous forme copolymère (Pom-c) à usage alimentaire.

Le premier étage de répartition permet d'obtenir une meilleure dispersion des ingrédients au niveau du substrat. En effet, lors de la mise en oeuvre du dispositif de répartition, le réservoir contenant les ingrédients est aligné verticalement au-dessus dudit dispositif de répartition. Plus particulièrement, le réservoir est centré avec le cylindre de répartition, son diamètre étant préférentiellement inférieur au diamètre du cylindre de mélange. Lors de l'ouverture du réservoir pour que les ingrédients qu'il contient tombent à l'extérieur dudit réservoir et au travers du dispositif de répartition, il est préférable de projeter lesdits ingrédients vers la paroi extérieure du cylindre de mélange de manière à mieux les répartir, notamment sur les zones périphériques du substrat.

Préférentiellement, le premier étage de répartition est agencé pour disperser lesdits ingrédients de manière radiale, sans favoriser particulièrement une direction.

Selon un mode de réalisation particulier, le premier étage de répartition peut comprendre une surface conique qui s'étend latéralement à l'intérieur du cylindre de mélange, ledit premier étage de répartition étant aligné co-axialement avec le cylindre de mélange, au moins un obstacle étant fixé sur ledit cylindre de mélange dans le prolongement de ladite surface conique, de manière à ce qu'un ingrédient tombant le long du premier étage de répartition soit projeté au-delà de la surface conique sur ledit au moins un obstacle.

Cette configuration astucieuse permet de garantir une amorce favorable à la répartition des ingrédients de manière homogène et aléatoire sur le substrat situé en contrebas. Tous les ingrédients tombant du réservoir situé au-dessus sont ainsi projetés latéralement vers la périphérie du cylindre de mélange, et au moins une partie d'entre eux, en atteignant la paroi dudit cylindre de mélange, rebondit sur un premier obstacle et est réorienté préférentiellement dans une direction centrale dudit cylindre de mélange.

Selon une configuration avantageuse du premier aspect de l'invention, le cylindre de mélange comprend par ailleurs des séparateurs divisant longitudinalement ledit cylindre de mélange en plusieurs secteurs. Il est ainsi possible de définir plusieurs régions sur le substrat.

Les séparateurs comprennent par exemple des plaques orientées d'une part dans la direction d'une génératrice du cylindre mélangeur, et d'autre part de manière radiale à la courbe directrice dudit cylindre mélangeur, de manière à diviser longitudinalement le cylindre en plusieurs secteurs. Les dimensions longitudinales des séparateurs sont telles qu'ils ne dépassent pas du cylindre mélangeur. Et préférentiellement, l'arrête inférieure des séparateurs est légèrement en retrait par rapport à l'arrête inférieure du cylindre mélangeur de manière à assurer une absence de contact entre le substrat et les séparateurs ainsi qu'un dépôt au niveau de ces séparateurs sur le substrat

Les séparateurs sont avantageusement réalisés dans une matière compatible avec les normes d'hygiène alimentaire, telle que par exemple de l'inox.

Eventuellement, un système d'obturation motorisé et contrôlé de chaque secteur, situé au-dessus de chaque secteur et, le cas échéant, sous le premier étage de répartition, peut permettre d'empêcher le dépôt d'ingrédients sur une région particulière du substrat. Selon une utilisation particulière, un tel système d'obturation de chaque secteur peut permettre de déposer aléatoirement et de manière homogène des ingrédients à l'intérieur d'un secteur particulier, permettant ainsi, par exemple, de réaliser des préparations culinaires composées de plusieurs associations d'ingrédients, chacune des associations d'ingrédients étant déposées de manière aléatoire et homogène à l'intérieure d'une région particulière du substrat.

Dans le cas de la répartition de garnitures à la surface d'une pâte à pizza abaissée, un tel système d'obturation peut ainsi permettre de réaliser une pizza composée de plusieurs recettes différentes sur chaque secteur. Pour ce faire, le contenu du réservoir composé dans un premier temps des ingrédients d'une première recette est déversé sur le dispositif de répartition pour lequel tous les secteurs sauf un sont fermés à l'aide du système d'obturation selon cette variante de l'invention. Les ingrédients sont alors répartis de manière homogène et aléatoire au sein dudit secteur et sur la pâte à pizza abaissée. Ensuite, le réservoir est à nouveau approvisionné avec les ingrédients d'une seconde recette. Ces ingrédients sont ensuite déversés au travers du dispositif de répartition dont seul un autre secteur est laissé passant, les ingrédients étant alors distribués de manière homogène et aléatoire à la surface du second secteur de la pâte à pizza abaissée. Le procédé est réitéré autant de fois que nécessaire en fonction du nombre de secteurs, de la pâte à pizza abaissée et du résultat recherché.

Selon une autre utilisation particulière de cette variante, il est possible de déposer des ingrédients sur plusieurs substrats situés sous le dispositif de prélèvement. Pour une meilleure compréhension, un exemple est donné pour une recette particulière, cette dernière n'étant nullement limitative du dispositif selon l'invention. On suppose alors que le réservoir comprend plusieurs céréales et plusieurs morceaux de différents fruits ainsi que des morceaux de chocolat. En plaçant plusieurs bols sous le dispositif de répartition, et plus particulièrement en plaçant un bol sous chaque secteur du cylindre mélangeur, il est possible de répartir le contenu dudit réservoir dans les différents bols en ouvrant et obturant alternativement le système d'obturation de chaque secteur.

Eventuellement, le dispositif de prélèvement peut aussi être placé au-dessus d'un seul secteur du cylindre mélangeur afin de déposer exclusivement à l'intérieur dudit secteur au moins une partie des ingrédients contenus dans ledit réservoir.

De manière avantageuse, le dispositif de prélèvement peut être placé successivement au-dessus de chaque secteur du cylindre mélangeur afin de réaliser des dépôts successifs et spécifiques à l'intérieur de chaque secteur du cylindre mélangeur.

De manière préférentielle, des obstacles peuvent être fixés sur les séparateurs du cylindre mélangeur, permettant astucieusement de mieux homogénéiser les ingrédients sur le substrat. Ainsi, chaque secteur assure la répartition aléatoire et homogène des ingrédients qui le traversent sur le secteur correspondant du substrat situé en dessous, indépendamment des autres secteurs.

Avantageusement, les obstacles peuvent comprendre des rabatteurs présentant une surface de contacte plane et/ou cylindrique, telles que par exemple des lamelles et/ou des tiges, lesdits rabatteurs étant fixés par au moins une de leurs extrémités sur une face intérieure du cylindre de mélange, à différentes hauteurs le long de son axe longitudinal et s'étendant dans une pluralité de directions.

Les rabatteurs comprennent des obstacles physiques qui s'opposent à la libre chute des ingrédients à l'intérieur du cylindre de mélange. Leurs dimensions, leur orientation, leur nombre et leur disposition à l'intérieur du cylindre de mélange permettent d'assurer une distribution radiale homogène des ingrédients sur le substrat. D'une manière générale, la densité d'obstacle est telle qu'un ingrédient tombant à l'intérieur du cylindre de mélange devrait rencontrer au moins un obstacle durant sa chute.

Les obstacles sont répartis suivant différentes hauteurs afin de favoriser de multiples rebonds durant la chute des ingrédients à l'intérieur du cylindre.

Préférentiellement, dans un plan transverse aux génératrices du cylindre de mélange, les obstacles sont préférentiellement orientés dans de multiples directions afin d'optimiser la répartition aléatoire et homogène des ingrédients. Cette configuration avantageuse permet de manière étonnante de favoriser la dispersion des ingrédients traversant le cylindre de mélange dans une direction transverse, et d'obtenir une meilleure homogénéité de répartition sur ledit substrat.

Les obstacles sont avantageusement réalisés dans des matériaux rendant compatible leur utilisation dans le domaine agro-alimentaire, tel que par exemple un inox ou une matière de type polyoxyméthylène sous forme copolymère (Pom-C).

Les obstacles ont généralement au moins une dimension supérieure à l'une des dimensions des ingrédients qui traversent le dispositif de répartition. Par exemple, les lamelles peuvent avoir une longueur comprise entre 15 et 30 mm pour une épaisseur inférieure au millimètre ; tandis que les tiges peuvent avoir un diamètre compris entre 0,5 et 3 mm pour une longueur supérieure à 50 mm.

Typiquement, les obstacles présentant une surface de contact plane sont agencés pour permettre d'écarter les ingrédients des parois extérieures du cylindre mélangeur.

Complémentairement, les obstacles présentant une surface de contact cylindrique sont agencés pour permettre de répartir aléatoirement les ingrédients par une agitation afin d'optimiser et homogénéiser leur mélange.

Avantageusement, le dispositif de répartition conforme à l'un quelconque des perfectionnements du second aspect de l'invention peut être mis en oeuvre sur le système de conservation du premier aspect de l'invention. Le dispositif de répartition est alors apte à être situé dans une position intercalaire entre le bac récupérateur et le substrat lorsque le bac récupérateur est dans la configuration de déchargement. Dans ce cas, le réservoir duquel tombent les ingrédients au travers du dispositif de répartition peut avantageusement être le bac récupérateur du dispositif de prélèvement et de dosage du système de conservation.

Selon un troisième aspect de l'invention, il est proposé un procédé de dosage et de dépôt d'ingrédients sur un substrat selon la revendication 12.

Selon un quatrième aspect de l'invention, il est proposé l'utilisation du système conforme à l'un quelconque des perfectionnements du premier aspect de l'invention pour la sélection et le dépôt d'ingrédients sur une pâte à pizza abaissée.

Selon un cinquième aspect de l'invention, il est proposé un automate agencé pour la confection de préparations culinaires comprenant :
- un système de conservation et de dosage d'ingrédients selon l'un quelconque des modes de réalisation du système selon le premier aspect de l'invention comprenant un poste de dressage, lesdits
- ingrédients étant aptes à être utilisés pour la confection desdites préparations culinaires ;
- un dispositif de cuisson de préparations culinaires ;
- un système de manutention agencé pour pouvoir introduire un support à une préparation culinaire dans le système de conservation et de dosage et pour pouvoir transférer la préparation culinaire du système de conservation et de dosage vers le dispositif de cuisson;
- une unité de traitement programmée pour commander ledit automate de manière à confectionner une préparation culinaire selon une recette prédéterminée.

Selon ce cinquième aspect de l'invention, le système de conservation et de dosage conforme à l'un quelconque des modes de réalisation du premier aspect et/ou le dispositif de répartition conforme à l'un quelconque des perfectionnements du second aspect selon l'invention peut s'intégrer dans un automate de confection de préparations culinaires « à la demande » et « à emporter », comme par exemple un automate pour fabriquer des pizzas. Le système selon l'invention peut ainsi être intégré dans une chaîne d'automatisation et permettre d'une part la sélection et le prélèvement d'ingrédients dans des quantités prédéterminées en fonction de recettes particulières, et/ou d'autre part le dépôt et la répartition aléatoire et homogène desdits ingrédients prélevés sur un substrat de la préparation culinaire, par exemple une pâte à pizza abaissée. Un tel automate peut ainsi assurer en toute autonomie une production en flux tendu de préparations culinaires à la commande et avec de la personnalisation des plats.

Des modes de réalisation variés de l'invention sont prévus, intégrant selon l'ensemble de leurs combinaisons possibles les différentes caractéristiques optionnelles exposées ici.

### Description des figures et des modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 représente dans une vue en perspective le système de conservation et de dosage selon l'invention,
- la FIGURE 2 illustre une vue de détail du dispositif de prélèvement et de dosage collaborant avec un compartiment,
- les FIGURES 3A et 3B illustrent une vue de détail de deux compartiments et de leur élément d'extraction,
- la FIGURE 4 montre une vue de détail partielle de la chambre de conservation, le bac récupérateur étant dans sa configuration de déchargement au-dessus d'un dispositif de répartition,
- la FIGURE 5 illustre l'intégration du système de conservation et de dosage selon l'invention dans un automate pour la préparation de préparations culinaires.

Sur les figures, les éléments communs à plusieurs figures conservent la même référence.

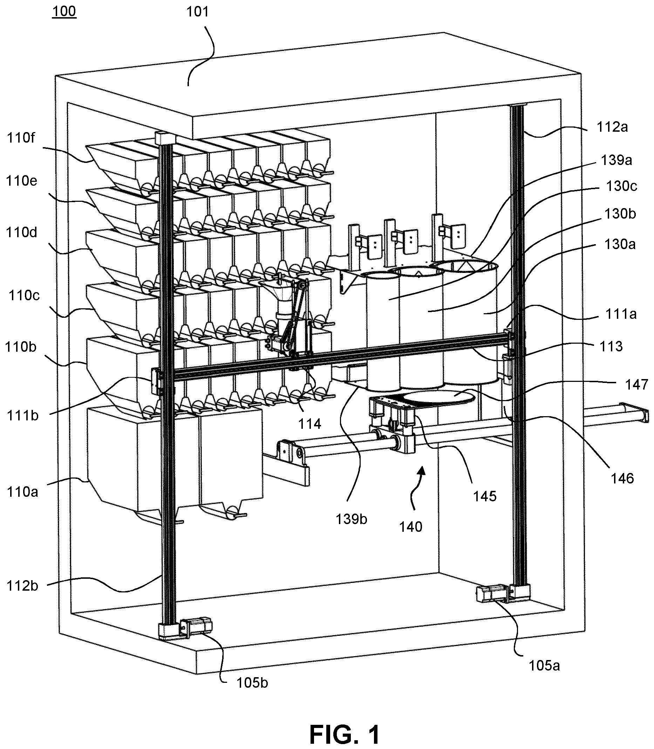

En référence à la FIGURE 1 le système de conservation et de dosage 100 comprend une chambre de conservation 101, ladite chambre de conservation étant agencée pour conserver une pluralité d'ingrédients, préférentiellement stockés dans des compartiments distincts, chaque compartiment ne comprenant qu'un seul type d'ingrédient.

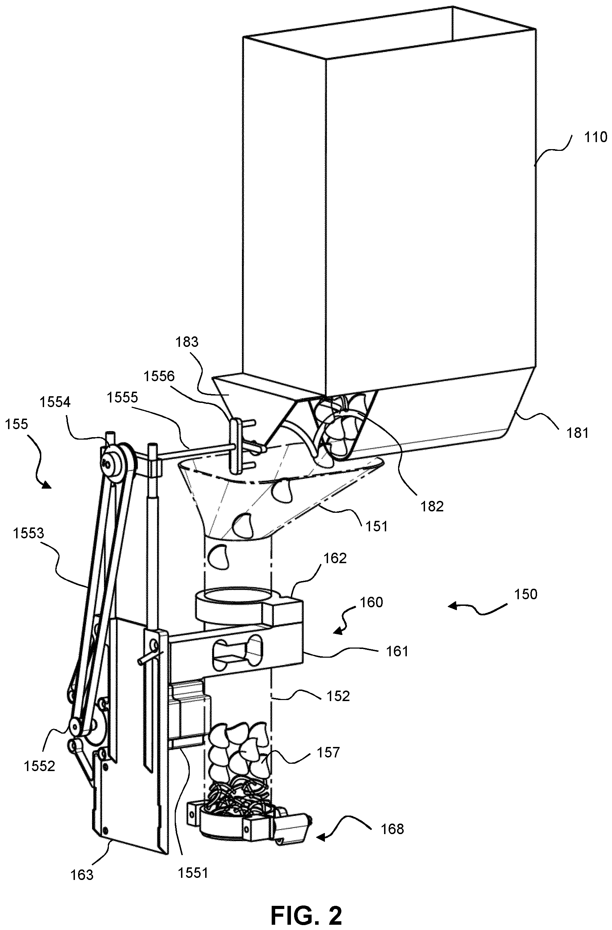

Conformément aux FIGURES 1 et 2, le système de conservation et de dosage conforme au premier aspect de l'invention comprend une chambre de conservation 101. A l'intérieur de la chambre de conservation, une pluralité de compartiments 110 permet de stocker individuellement des ingrédients. Un dispositif de prélèvement et de dosage 150 permet de prélever une quantité prédéterminée d'ingrédients dans chaque compartiment 110 grâce à un mécanisme de convoyage. Un dispositif de convoyage secondaire 140 permet de faire entrer ou sortir dans la chambre de conservation 101 un substrat 147 transporté par un chariot de convoyage 145 depuis une trappe 146 située sur une face latérale de ladite chambre de conservation 101. Dans la configuration de déchargement, le chariot de convoyage 145 est positionné en dessous du dispositif de répartition afin que les ingrédients prélevés dans le dispositif de prélèvement et de dosage 150 situé au-dessus dudit dispositif de répartition soient déposés de manière aléatoire et homogène sur le substrat 147.

Une porte, non représentée pour plus de clarté et située sur une face avant de la chambre de conservation 101 permet alternativement d'ouvrir ladite chambre de conservation 101 afin de pouvoir accéder aux compartiments 110 situés à l'intérieur, ou de fermer ladite chambre de conservation 101, préférentiellement de manière hermétique.

Selon un mode de réalisation avantageux, la chambre de conservation 101 peut comprendre des moyens de réfrigération ou de congélation (non représentés) afin de maintenir une température adaptée à la conservation des ingrédients stockés.

La chambre de conservation 101 comprend une pluralité de compartiments 110. Les compartiments sont préférentiellement organisés en une pluralité de lignes 110a-110f et s'étendent depuis une face latérale de la chambre de conservation 110 en direction de la face latérale opposée. L'espace entre deux lignes consécutives est suffisant pour permettre au dispositif de prélèvement et de dosage 150 de se déplacer entre les compartiments 110, et de collaborer avec eux. Latéralement, les compartiments 110 sont préférentiellement juxtaposés les uns aux autres afin de minimiser l'occupation du volume intérieur de la chambre de conservation 101.

Avantageusement, tous les compartiments d'une même ligne ont les mêmes dimensions, chaque ligne pouvant comprendre un nombre différent de compartiments. Dans l'exemple illustré sur la FIGURE 1, la première ligne 110a comprend uniquement deux compartiments tandis que les lignes 110b-110f comprennent chacune huit compartiments. Par ailleurs, dans l'exemple illustré sur la FIGURE 1, les hauteurs des compartiments de chaque ligne sont toutes différentes, les hauteurs des compartiments des lignes supérieures étant inférieures aux hauteurs des compartiments situés sur les lignes inférieures. Les compartiments seront décrits plus en détail dans la FIGURE 2.

Le dispositif de prélèvement et de dosage 150 comprend un mécanisme de convoyage qui permet de déplacer un bac récupérateur 151,152 entre chaque compartiment 110 afin de collaborer avec l'un d'entre eux pour prélever une quantité prédéterminée d'ingrédients.

Le mécanisme de convoyage illustré sur les FIGURES 1 et 2 comprend deux axes de déplacement, selon lesquels le dispositif de prélèvement et de dosage 150 peut être actionné alternativement ou simultanément selon les besoins, notamment afin de minimiser les temps de déplacement entre deux compartiments 110. Le premier axe de déplacement est aligné avec la plus grande dimension de la chambre de conservation 101, en l'occurrence verticale. Il est matérialisé par deux rails principaux 112a et 112b fixés respectivement sur deux parois opposées de la chambre de conservation 101 à l'aide de moyens de fixation.

Sur chacun des rails principaux 112a et 112b, un patin de glissement 111a et 111b est monté en liaison glissière pour lui permettre de se déplacer le long du rail principal correspondant. Un organe moteur 105, formé de deux moteurs 105a, 105b, permet de commander le déplacement de chaque patin de glissement 111 le long du rail principal correspondant. Les moteurs 105a et 105b peuvent être synchronisés.

Un rail secondaire 113 relie les deux patins de glissement 111 afin de définir un second axe de déplacement du dispositif de prélèvement et de dosage150, transversalement aux rails principaux 112.

De manière analogue, un patin de glissement 114 est monté au travers d'une liaison glissière sur le rail secondaire 113 afin de pouvoir se déplacer le long dudit rail secondaire 113, transversalement aux rails principaux 112.

Le patin de glissement 114 supporte le dispositif de prélèvement et de dosage 150 qui sera décrit plus en détail dans la FIGURE 2.

Avantageusement, la chambre de conservation 101 comprend en outre au moins un dispositif de répartition 130 afin de répartir de manière aléatoire et homogène les ingrédients prélevés par le dispositif de prélèvement sur un substrat. Dans l'exemple illustré sur la FIGURE 1, trois dispositif de répartition 130 sont représentés, chaque dispositif de répartition ayant un diamètre différent de celui des autres afin de s'adapter à différentes tailles de substrat et de répartir de manière optimale les ingrédients prélevés sur lesdits substrats. Chaque dispositif de répartition 130 est agencé de manière à ce que le dispositif de prélèvement et de dosage 150 puisse être déplacé au-dessus de chaque dispositif de répartition 130.

En dessous des dispositifs de répartition 130, le dispositif de convoyage secondaire 140 motorisé permet de déplacer un substrat 147 vers l'intérieur de la chambre de conservation 101, et plus particulièrement en dessous d'un dispositif de répartition 130.

La FIGURE 2 décrit une vue de détail du dispositif de prélèvement et de dosage 150 collaborant avec un compartiment 110 pour prélever des ingrédients. Il comprend un réceptacle évasé 151 et un récipient 152 situé en dessous du réceptacle évasé 151. Le réceptacle évasé 151 est orienté de manière à présenter une ouverture large vers le haut, et une ouverture réduite vers le bas, cette ouverture réduite étant connectée au récipient 152.

Les dimensions du récipient 152 sont telles qu'il peut contenir l'ensemble des ingrédients prélevés en quantité prédéterminée dans une pluralité de compartiments. Ces dimensions sont par exemple adaptées pour contenir l'ensemble des ingrédients de la préparation culinaire nécessitant le plus grand volume d'ingrédients. Les ingrédients prélevés successivement dans la pluralité de compartiments sont ainsi stockés temporairement dans le récipient 152 par couches successives.

Un capteur de poids 160 permet de contrôler en temps réel l'évolution du poids des ingrédients qui sont tombés dans le récipient 152. Il permet ainsi de contrôler le dispositif de prélèvement et de dosage 150, et plus particulièrement l'organe moteur 155 qui commande l'extraction des ingrédients de chaque compartiment 110. Pour chaque prélèvement, lorsque la quantité prédéterminée d'ingrédients est atteinte - en estimant le poids du récipient 152 - l'organe moteur 155 fait basculer l'élément d'extraction 1552 dans une configuration fermée.

Préférentiellement, le capteur de poids est agencé pour détecter la chute d'ingrédients à l'intérieur du récipient 152, et plus particulièrement agencé pour détecter le poids de chaque ingrédient tombant sur le réceptacle évasé 151. Dans la configuration de prélèvement, le dispositif de prélèvement et de dosage 150 est avantageusement agencé pour que le réceptacle évasé 151 soit situé dans une position telle que chaque ingrédient extrait du compartiment tombe sur la surface interne dudit réceptacle évasé 151, aucun ingrédient ne tombant directement dans le récipient 152 sans toucher cette surface interne. De cette manière, il est possible de déterminer le poids instantané des ingrédients extraits du compartiment et de contrôler précisément l'arrêt de ladite extraction d'ingrédients lorsque la quantité prédéterminée d'ingrédients est atteinte.

L'organe moteur 155 comprend un moteur 1551, une première poulie 1552, une courroie 1553, une deuxième poulie 1554, un élément de liaison 1555 et une pièce de connexion 1556. Le moteur est agencé pour entraîner la première poulie 1552 en rotation, ce mouvement de rotation étant transmis à la deuxième poulie 1554 via la courroie 1553. Le mouvement de rotation est ensuite transmis de la deuxième poulie 1554 à la pièce de connexion 1556 via l'élément de liaison 1555. La pièce de connexion 1556 est agencée pour pouvoir collaborer avec un élément d'extraction 182 monté en liaison pivot sur le compartiment 110. L'organe moteur 155 et l'élément d'extraction 182 permettent ainsi de faire basculer ledit compartiment 110 alternativement dans les configurations de prélèvement ou de stockage décrites précédemment.

Le capteur de poids peut être de n'importe quel type, par exemple optique, capacitif ou résistif.

Préférentiellement, le capteur de poids 160 est du type d'une balance, le bac récupérateur 151, 152 étant monté sur ladite balance par l'intermédiaire d'une bague de fixation 162, la balance 160 étant fixée solidairement par l'intermédiaire d'un levier 161 à une plaque support 163 du dispositif de prélèvement et de dosage 150.

Préférentiellement, un système d'amortissement mécanique est prévu pour réduire les vibrations mécaniques lors de l'utilisation du dispositif de prélèvement et de dosage 150. Un système de filtrage électronique ou logiciel des signaux générés par le capteur de mesure peut aussi être utilisé, à la place ou en plus du système d'amortissement mécanique, pour réduire le bruit de mesure et améliorer la précision de la mesure de poids et, *in fine,* le prélèvement des ingrédients dans chaque compartiment.

Sur sa partie inférieure, le récipient 152 comprend un mécanisme de retenue 168 permettant de retenir les ingrédients 157 contenus dans le récipient 152 dans une position fermée, et de vider le récipient 152 dans une position ouverte. De préférence, la durée d'ouverture du mécanisme de retenue 168 est très brève de manière à ce que tous les ingrédients commencent à tomber en même temps, notamment ceux situés au niveau des zones périphériques dudit récipient 152 et ceux situés plus au centre.

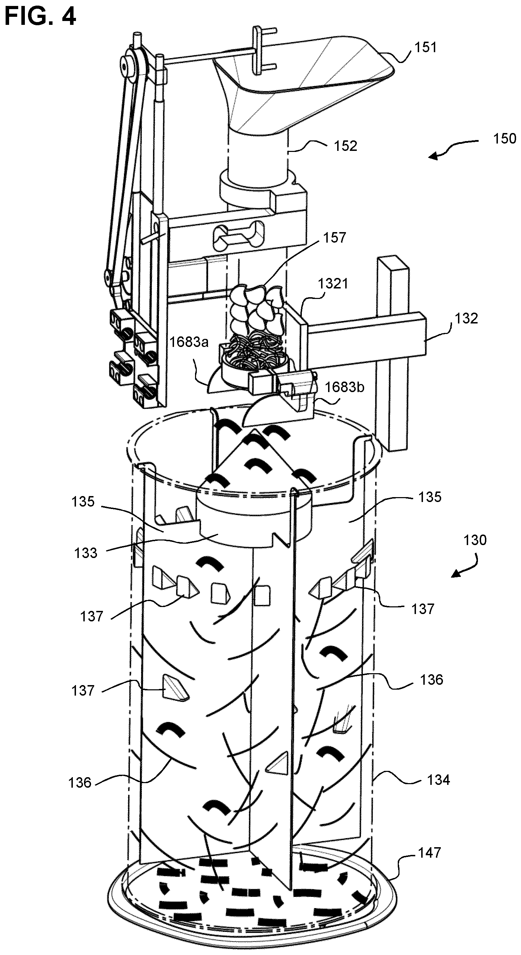

Dans l'exemple illustré sur la FIGURE 2, le mécanisme de retenue 168 comprend deux trappes (visibles sur la figure 4) en liaison pivot par rapport au récipient 152. Les trappes sont maintenues dans la position fermée par une force élastique. Elles peuvent être basculées dans la position ouverte par application d'une force orientée vers le bas.

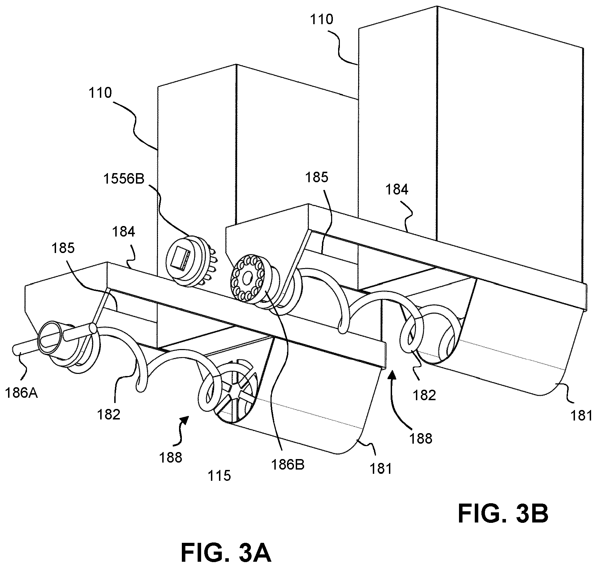

En référence aux FIGURES 2, 3A et 3B, deux modes de réalisation particuliers de compartiments vont maintenant être décrits, ainsi que leur élément d'extraction des ingrédients.

Le compartiment 110 illustré est agencé pour contenir une quantité d'ingrédients permettant la confection de plusieurs préparations culinaires. Dans sa région supérieure, il comprend un réservoir pour stocker lesdits ingrédients et, dans sa partie inférieure, il comprend un élément d'extraction permettant d'extraire une quantité prédéterminée d'ingrédients de manière contrôlée.

Un compartiment comprend dans sa partie supérieure une forme parallélépipédique permettant de stocker une quantité relativement importante d'ingrédients. La partie supérieure du compartiment 110 peut être fermée à l'aide d'un couvercle amovible (non représenté) afin de permettre à la fois un contrôle visuel des ingrédients qu'il contient, et un remplissage aisé.

De manière préférentielle, la forme générale du compartiment 110 est plutôt élancée vers le haut, avec une hauteur supérieure aux deux autres dimensions (largeur et profondeur) de manière à ce qu'une grande partie des ingrédients stockés soit superposée et qu'une partie réduite desdits ingrédients stockés atteigne la région inférieure sous le simple effet de la gravité.

Dans sa région inférieure, le compartiment 110 comprend un capot 181 de forme concave permettant de retenir les ingrédients stockés en évitant qu'ils ne tombent sous l'effet de la gravité. Le capot 181 obture au moins en partie la section transverse de la partie parallélépipédique dudit compartiment 110.

Préférentiellement, le capot 181 présente une forme permettant l'insertion d'un élément d'extraction. Dans l'exemple illustré sur les FIGURES 2 et 3, l'élément d'extraction 182 est un mécanisme de type vis sans fin. La vis est maintenue entre la face arrière du compartiment 110 (non visible) et un support frontal 183 maintenu à distance du compartiment 110 par l'intermédiaire de deux montants latéraux 184 et 185.

Préférentiellement la forme concave du capot 181 enveloppe l'enroulement hélicoïdal de la vis 182 afin de favoriser l'avancement des ingrédients dans la direction du support frontal 183, et plus particulièrement en direction de la zone de largage 188 formée par l'espace laissé libre par le capot 181.

Comme visible sur la FIGURE 2, le dispositif de prélèvement et de dosage 150 est préférentiellement agencé dans sa configuration de prélèvement de manière à ce que le réceptacle évasé 151 soit situé à l'aplomb d'une zone de largage 188 afin que tous les ingrédients prélevés tombent dans ledit réceptacle évasé 151.

Dans chacun des modes de réalisation des figures 3A et 3B, la vis 182 est montée libre en rotation entre la face arrière du compartiment 110 et le support frontal 183. Elle peut être actionnée par l'organe moteur 155 qui, comme évoqué précédemment peut alternativement être monté sur le compartiment, par exemple au niveau de la face arrière dudit compartiment, ou au niveau du dispositif de prélèvement et de dosage 150 (visible sur la figure 2).

Au niveau du support frontal 183, la vis 182 est couplée en rotation avec un élément de connexion 186 qui permet de collaborer avec le dispositif de prélèvement et de dosage 150, et plus particulièrement avec la pièce de connexion 1556. Ainsi, lorsque le dispositif de prélèvement et de dosage 150 arrive à proximité du compartiment 110, ce dernier établit un couplage en rotation entre la pièce de connexion 1556 et l'élément de connexion 186. Ainsi, le dispositif de prélèvement et de dosage 150 collabore avec le compartiment afin d'extraire la quantité prédéterminée d'ingrédients, en actionnant l'organe moteur 155 situé soit sur le compartiment 110, soit sur le dispositif de prélèvement et de dosage 150.

Dans le mode de réalisation de la figure 3A, l'élément de connexion 186A prend la forme d'une tige solidaire en rotation de la vis 182. Un élément d'obturation partielle 115 est également disposé au niveau d'un orifice de sortie du compartiment 110. L'élément d'obturation 115 comprend un ensemble de languettes élastiques s'étendant de manière concentrique depuis la périphérie de l'orifice de sortie. Dans le mode de réalisation de la figure 3B, l'élément de connexion 186B prend la forme d'un disque muni d'une pluralité d'ouvertures. La pièce de connexion 1556B du dispositif de prélèvement et de dosage 150 peut alors comporter un ensemble de doigts aptes à venir s'accoupler dans les ouvertures de l'élément de connexion 186B.

Eventuellement, la pièce de connexion 1556 et l'élément de connexion 186 sont agencés pour établir d'abord un couplage temporaire en rotation, avec frottement, afin de jouer le rôle d'un embrayage, puis un couplage en rotation par engagement afin de garantir la liaison mécanique entre l'organe moteur et l'élément d'extraction.

De manière avantageuse, le dispositif de prélèvement et de dosage 150 peut comprendre un axe de translation motorisé agencé pour pouvoir déplacer ledit dispositif de prélèvement et de dosage de manière à coupler ou découpler l'organe moteur de l'élément d'extraction.

En référence à la FIGURE 4, le dispositif de répartition conforme à un aspect de l'invention va maintenant être décrit, la FIGURE 4 illustrant une vue de détail du dispositif de répartition placé dans une configuration de déchargement, le bac récupérateur étant placé au-dessus du dispositif de répartition.

Comme visible sur la FIGURE 1, la chambre de conservation 101 comprend trois dispositifs de répartition 130, référencés 130a, 130b et 130c.

Chaque dispositif de répartition 130 comprend un cylindre de mélange 134 apte à être placé au-dessus du substrat 147, l'axe longitudinal du cylindre de mélange 134 étant sensiblement perpendiculaire à la surface du substrat 147.

Les dimensions latérales de chaque cylindre de mélange 134 sont adaptées aux dimensions latérales du substrat 147 sur lequel les ingrédients 157 doivent être déposés, de manière à ce que la totalité des ingrédients traversant le dispositif de répartition 130 tombent sur le substrat 147. Plus particulièrement, le diamètre extérieur du cylindre de mélange 134 est inférieur à la plus petite dimension latérale extérieure du substrat sur lequel doivent être déposés les ingrédients.

Dans l'exemple illustré sur la FIGURE 1, la chambre de conservation 101 comprend trois dispositifs de répartition 130 : le diamètre extérieur du premier cylindre de mélange 134a est de 25 cm, le diamètre du second cylindre de mélange 134b est de 20 cm, et celui du troisième cylindre de mélange 134c est de 14 cm.

Chaque dispositif de répartition 130 est fixé solidairement à la chambre de conservation 101, par l'intermédiaire d'un support supérieur 139a et d'un support inférieur 139b visibles sur la FIGURE 1. Chaque dispositif de répartition 130 est agencé pour permettre au dispositif de prélèvement et de dosage 150 de se déplacer alternativement au-dessus de chaque cylindre de mélange 134 dans une configuration permettant aux ingrédients contenus dans le récipient 152 de tomber à l'intérieur de l'un des cylindres de mélange 134.

Plus particulièrement, un système d'ouverture 132 positionné à l'aplomb de chaque cylindre de mélange 134 permet de définir une position dite de dépôt dans laquelle le récipient 152 est préférentiellement aligné de manière concentrique avec le cylindre de mélange 134 et agencé pour déclencher l'ouverture du mécanisme de retenue 168, et en particulier des trappes 1683a et 1683b. Plus particulièrement, le système d'ouverture 132 comprend une plaque d'appui 1321 sur laquelle les trappes 1683 peuvent prendre appui suite à un déplacement vertical du dispositif de prélèvement et de dosage 150 vers le haut. Cette appui entraîne l'ouverture des trappes 1683, et donc la chute des ingrédients 157 contenus dans le récipient 152. La fermeture des trappes 1683 est actionnée en déplaçant le dispositif de prélèvement et de dosage 150 vers le bas, jusqu'à une position dans laquelle les trappes 1683 ne sont plus en appui sur la plage d'appui 1321.

Les cylindres de mélange 134a et 134b comprennent sur leur partie supérieure respective un premier étage de répartition 133a et 133b prenant la forme d'un cône dont le sommet est sensiblement aligné avec l'axe de symétrie des cylindres 134a et 134b. Sur l'exemple illustré à la FIGURE 1, le sommet de chaque cône 133 est sensiblement aligné avec l'arrête supérieure du cylindre de mélange correspondant 134 correspondant.

Chaque cylindre de mélange 134 comprend, entre son extrémité supérieure et son extrémité inférieure, des obstacles 136-137 agencés pour s'opposer à la libre chute des ingrédients, de manière à générer un déplacement aléatoire latéral et à les répartir aléatoirement et de manière homogène à la surface du substrat situé en dessous (non représenté).

Dans le cas où un premier étage de répartition 133 est mis en oeuvre, les obstacles 136-137 sont tous situés en dessous dudit premier étage de répartition 133, et préférentiellement, ils sont tous situés en-deçà d'une position le long de la paroi intérieure du cylindre de mélange 134 correspondant à l'intersection du prolongement de la surface conique du premier étage de répartition avec ladite surface intérieure du cylindre de mélange 134.

Dans l'exemple illustré sur la FIGURE 4, les obstacles 136-137 prennent de manière complémentaire la forme soit de prismes 137 fixés par un premier côté sur la surface intérieure du cylindre de mélange 134 et présentant une surface de contact inclinée vers le haut et vers l'intérieur dudit cylindre de mélange 134 correspondant, soit de tiges 136 fixées par au moins une de leur extrémité sur la face intérieure du cylindre de mélange 134.

D'une manière générale, les obstacles 136-137 sont positionnés, afin d'optimiser la répartition, et à différentes hauteurs le long d'un axe longitudinal du dispositif de répartition 130, lesdits obstacles 136-137 s'étendant dans une pluralité de directions.

De manière plus particulière, les prismes 137 sont disposés sur le pourtour périphérique intérieur du cylindre de mélange 134, selon un premier plan dit de rebond positionné sur la partie supérieure du cylindre de mélange 134. Dans le cas particulier illustré sur la FIGURE 4, le premier plan de rebond est défini par une position correspondant à l'intersection du prolongement de la surface conique du premier étage de répartition 133 avec ladite surface intérieure du cylindre de mélange 134. Cette configuration permet avantageusement et d'obtenir une excellente distribution latérale au niveau du substrat situé en-dessous.

Les cylindres de mélange 134 peuvent comprendre d'autres prismes répartis afin d'optimiser la répartition des ingrédients en dessous de ce premier plan de rebond.

Les tiges 137 sont préférentiellement toutes orientées vers le bas afin d'éviter que certain ingrédients tombant à l'intérieur du cylindre de mélange 134 ne restent coincés sur ces tiges.

Les tiges 137 peuvent être rectilignes ou incurvées, selon l'effet recherché.

Dans l'exemple illustré sur la FIGURE 4, Le dispositif de répartition 130 comprend en outre des séparateurs 135 qui définissent, dans un plan transverse à l'axe longitudinal du cylindre de mélange 134, au moins deux secteurs. Plus particulièrement, le dispositif de répartition 130 comprend quatre séparateurs 135a répartis à 90° autour de l'axe longitudinal central et divisant ledit dispositif de répartition 130 en quatre secteurs identiques.

Alternativement, un dispositif de répartition 130 peut comprendre par exemple trois séparateurs 135 répartis à 120° autour de l'axe longitudinal central et divisant ledit dispositif de répartition 130b en trois divisions identiques.

Alternativement, un dispositif de répartition 130 peut aussi ne pas comprendre de tels séparateurs.

Une partie des obstacles 136-137 est aussi fixées de part et d'autre des séparateurs.

Comme visible sur la FIGURE 7, dans un plan transverse à l'axe longitudinal d'un cylindre de mélange 134, la distribution des obstacles 136-137 et leur typologie sont agencées de manière à ce que la distance entre deux obstacles soit légèrement supérieure aux dimensions caractéristiques des ingrédients qui tombent à l'intérieur du dispositif de mélange 130.

En effet, si cette distance est trop grande, alors la probabilité de rebond d'un obstacle tombant à l'intérieur du cylindre de mélange 134 est trop faible et la répartition desdits ingrédients à la surface du substrat n'est pas optimale.

A l'inverse, si, dans le plan transverse, la distance entre deux obstacles est beaucoup plus petite que les dimensions caractéristiques des ingrédients qui tombent à l'intérieur du cylindre de mélange 134, alors la probabilité que des ingrédients restent coincés à l'intérieur dudit cylindre de mélange 134 est trop importante. Dans ce cas, le dépôt des ingrédients à la surface du substrat n'est pas optimal non plus.

Avantageusement, le dispositif de répartition selon l'invention peut être mis en oeuvre sur le système de conservation décrit dans la FIGURE 1. Dans ce cas, le réservoir duquel tombent les ingrédients au travers du dispositif de répartition peut avantageusement être le bac récupérateur 151,152 du dispositif de prélèvement et de dosage 150 du système de conservation 100.

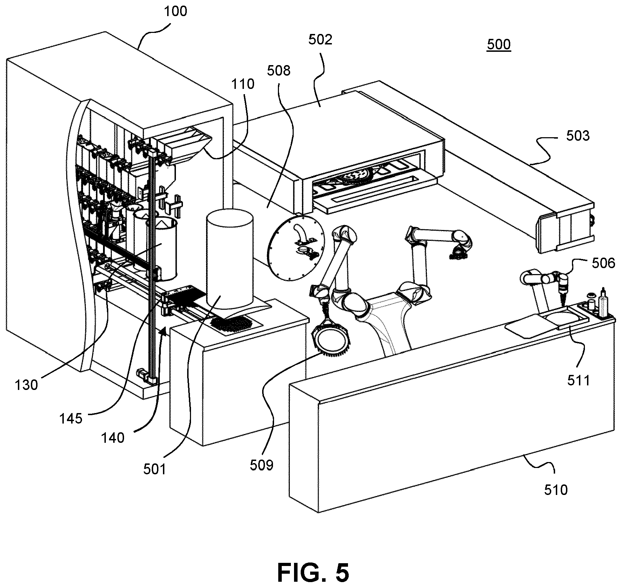

La FIGURE 5 décrit l'utilisation d'un système de conservation et de dosage 100 selon l'un quelconque des perfectionnements évoqués précédemment dans un système de confection automatique de préparations culinaires, et plus particulièrement de pizzas.

Le système de conservation et de dosage 100 peut être intégré à un automate 500 réalisant la confection, la cuisson, et/ou l'emballage et/ou la livraison de préparations culinaires, et particulièrement de pizzas.

Ainsi, un tel automate peut comprendre :
- un système de conservation et de dosage d'ingrédients 100 tel que décrit en référence à la figure 1 , lesdits ingrédients étant aptes à être utilisés pour la confection desdites préparations culinaires ;
- un dispositif de cuisson 502 de préparations culinaires ;
- un système de manutention 504-506 agencé pour pouvoir transférer au moins une des préparations culinaires dressées entre notamment le système de conservation et de dosage 100 et le dispositif de cuisson 502 ;
- une unité de traitement programmée (non représentée) pour commander ledit automate 500 de manière à confectionner une préparation culinaire selon une recette prédéterminée.

Pour faciliter la compréhension, un exemple va être donné pour la préparation d'une pizza, l'automate étant cependant agencé pour confectionner une large variété de préparations culinaires, comme évoqué précédemment.

Dans l'exemple illustré sur la FIGURE 5, l'automate comprend par ailleurs un réservoir à pâte fraîche 508, une formeuse 501 pour abaisser la pâte utilisée pour la confection de ladite pizza ; et le système de manutention mis en oeuvre comprend notamment trois bras robotisés multiaxes 504-506 et un dispositif de convoyage 140 entre un dispositif de formage de la pâte fraîche 501 et le système de conservation et de dosage 100. Les bras robotisés sont agencés pour manipuler la pizza en cours de confection, par exemple par l'intermédiaire d'une pelle (plate) 509, et pour la transférer d'un poste à un autre.

Ainsi, au cours d'une première étape, une quantité prédéterminée de pâte - de préférence fraîche - est extraite du réservoir 508 pour former un pâton. Cette quantité prédéterminée est dimensionnée de manière à pouvoir aplatir le pâton aux dimensions souhaitées d'une pizza.

Pour ce faire, le pâton est transféré vers un dispositif de formage 501 qui lui donne la forme souhaitée. En l'occurrence, le pâton donne une pâte dite abaissée, à partir de laquelle la pizza sera confectionnée.

Eventuellement, une sauce (par exemple tomate ou à base de crème) est déversée et étalée afin de préparer le substrat.

Ensuite, la pâte ainsi préparée est transférée à l'intérieur du système de conservation et de dosage 100 par un chariot de convoyage 145. Ce dernier est déplacé par le dispositif de convoyage 140 jusque dans une position située à l'aplomb de l'un des dispositifs de répartition 130 afin que certains ingrédients y soient déposés. Ces ingrédients sont prélevés dans des quantités prédéterminées depuis certains compartiments 110 situés dans la chambre de conservation.

De manière préférentielle le dépôt desdits ingrédients est réalisé de manière aléatoire et homogène à la surface de la pizza à l'aide d'un système de répartition 130.

Ensuite, la pizza est transférée vers et enfournée dans le dispositif de cuisson 502 afin d'être cuite. En fonction du type de pizza enfournée, les paramètres de cuisson sont déterminés. Ces paramètres comprennent notamment au moins une durée et au moins un cycle de puissance. Un cycle de cuisson peut comprendre plusieurs régimes de cuisson variables ou constants.

Lorsqu'une pizza arrive en fin de cycle de cuisson, la porte du dispositif de cuisson 502 est ouverte durant un laps de temps le plus court possible, et durant lequel un des bras robotisés, par exemple le bras robotisé 504 saisit ladite pizza.

Le bras robotisé 504 dépose alors la pizza dans un carton 511 déposé sur un poste de conditionnement 510. Le carton 151 est transféré par le bras robotisé 502 depuis un système de distribution de cartons 503. La pizza peut éventuellement être découpée et/ou assaisonnée.

## Revendications

1. Système de conservation et de dosage d'ingrédients comprenant :
- une chambre de conservation (101) comprenant un ensemble de compartiments (110) agencés pour stocker des ingrédients,
- un dispositif de prélèvement et de dosage (150) des ingrédients, agencé pour pouvoir prélever successivement de chacun des compartiments (110) une quantité prédéterminée d'ingrédients,
**caractérisé en ce que** le dispositif de prélèvement et de dosage (150) des ingrédients comprend :
- un bac récupérateur (151,152) agencé pour stocker temporairement et en couches successives les ingrédients prélevés de chaque compartiment,
- un mécanisme de convoyage commandé, agencé pour pouvoir déplacer le bac récupérateur (151,152) à l'aplomb de chaque compartiment (110) de manière à ce que les ingrédients prélevés dudit compartiment (110) tombent dans le bac récupérateur (151,152),
- une unité de commande, programmée pour commander le mécanisme de convoyage et le dispositif de prélèvement et de dosage (150)
**et en ce que** :
- le dispositif de prélèvement et de dosage (150) comprend :
- un élément d'extraction (182) agencé pour pouvoir collaborer successivement avec chaque compartiment (110) de manière à extraire une partie des ingrédients contenus par le compartiment (110) avec lequel l'élément d'extraction collabore ;
- un organe moteur agencé pour pouvoir actionner l'élément d'extraction (182) lorsqu'il collabore avec l'un desdits compartiments ;
ledit dispositif de prélèvement et de dosage (150) étant configuré pour pouvoir prendre au moins deux configurations :
• une configuration dite couplée, dans laquelle l'élément d'extraction est couplé à l'un des compartiments (110) afin d'en extraire une partie des ingrédients vers le bac récupérateur (151,152) ;
• une configuration dite découplée, dans laquelle l'élément d'extraction est découplé de chaque compartiment (110), de manière à permettre au dispositif de prélèvement (150) et de dosage de pouvoir se déplacer vers un autre compartiment (110) et/ou vers la configuration de déchargement,
- **ou en ce que** :
- chaque compartiment comprend :
- un élément d'extraction (182) agencé pour pouvoir prélever une partie des ingrédients contenus dans ledit compartiment (110) ;
- un organe moteur agencé pour pouvoir actionner l'élément d'extraction ;
le dispositif de prélèvement et de dosage (150) est configuré pour pouvoir prendre au moins deux configurations :
• une configuration dite couplée, dans laquelle le bac récupérateur (151,152) est placé à l'aplomb de l'un des compartiments (110), de manière à pouvoir récupérer les ingrédients extraits ;
• une configuration dite découplée, dans laquelle le dispositif de prélèvement et de dosage (150) est apte à se déplacer vers un autre compartiment (110) et/ou vers la configuration de déchargement,
**ou en ce que** :
- chaque compartiment (110) comprend un élément d'extraction (182) agencé pour pouvoir prélever une partie des ingrédients contenus dans ledit compartiment (110) ;
- le dispositif de prélèvement et de dosage (150) comprend un organe moteur agencé pour pouvoir collaborer successivement avec chaque compartiment de manière à pouvoir actionner l'élément d'extraction (182) du compartiment avec lequel il collabore ;
ledit dispositif de prélèvement et de dosage (150) étant configuré pour pouvoir prendre au moins deux configurations :
• une configuration dite couplée, dans laquelle l'organe moteur est couplé à l'élément d'extraction de l'un des compartiments (110) de manière à pouvoir actionner l'élément d'extraction dudit compartiment et prélever une partie des ingrédients dudit compartiment vers le bac récupérateur (151,152) ;
• une configuration dite découplée, dans laquelle l'organe moteur est découplé de chaque élément d'extraction, de manière à permettre au dispositif de prélèvement et de dosage (150) de se déplacer vers un autre compartiment (110) et/ou vers la configuration de déchargement.

2. Système selon la revendication précédente, **caractérisé en ce que** le mécanisme de convoyage est agencé en outre pour pouvoir déplacer le bac récupérateur (151,152) dans une configuration de déchargement, dans laquelle le bac récupérateur est situé à l'aplomb d'un substrat, le bac récupérateur étant aussi agencé pour pouvoir déposer sur le substrat les ingrédients prélevés.

3. Système selon la revendication 1 ou 2, **caractérisé en ce que** l'élément d'extraction (182) comprend un mécanisme du type vis sans fin, le mécanisme comprenant une vis dont la géométrie et la vitesse de rotation permettent de contrôler la quantité et le débit d'extraction des ingrédients.

4. Système selon l'une quelconque des revendications 1 à 3, **caractérisé en ce que** le dispositif de prélèvement et de dosage (150) d'ingrédients comprend par ailleurs un dispositif pour mesurer le poids (160) et/ou le volume des ingrédients en cours de prélèvement, l'unité de commande étant programmée pour stopper le prélèvement des ingrédients d'un compartiment (110) lorsque la quantité prédéterminée d'ingrédients a été prélevée.

5. Système selon l'une quelconque des revendications précédentes prise avec la revendication 2, **caractérisé en ce qu'**il comporte un dispositif de répartition (130), apte à être situé dans une position intercalaire entre le bac récupérateur (151,152) et le substrat lorsque le bac récupérateur est dans la configuration de déchargement, et agencé de manière à permettre une répartition homogène et aléatoire sur ledit substrat des ingrédients prélevés.

6. Système selon la revendication 5, **caractérisé en ce que** le dispositif de répartition des ingrédients (130) comprend un cylindre de mélange (134), un axe longitudinal du cylindre de mélange (134) étant perpendiculaire à la surface du substrat, le cylindre de mélange (134) comprenant, entre une extrémité supérieure et une extrémité inférieure, des obstacles (136-137) agencés pour s'opposer à la libre chute des ingrédients, de manière à générer un déplacement latéral aléatoire des ingrédients pour les répartir aléatoirement et de manière homogène à la surface du substrat.

7. Système selon la revendication précédente, **caractérisé en ce que** le dispositif de répartition des ingrédients (130) comprend par ailleurs un premier étage de répartition (133) agencé pour disperser radialement autour de l'axe longitudinal les ingrédients provenant du bac récupérateur (151,152), ledit premier étage de répartition étant situé au-dessus ou dans la partie supérieure du cylindre de mélange (134).

8. Système selon la revendication 7, **caractérisé en ce que** le premier étage de répartition (133) comprend une surface conique qui s'étend latéralement à l'intérieur du cylindre de mélange (134), ledit premier étage de répartition (133) étant aligné co-axialement avec le cylindre de mélange (134), **et en ce qu'**au moins un obstacle (136-137) est fixé sur ledit cylindre de mélange (134) dans le prolongement de ladite surface conique, de manière à ce qu'un ingrédient tombant le long du premier étage de répartition (133) soit projeté au-delà de la surface conique sur ledit au moins un obstacle (136-137).

9. Système selon l'une quelconque des revendications 6 à 8, **caractérisé en ce que** le cylindre de mélange (134) comprend par ailleurs des séparateurs (135) divisant longitudinalement ledit cylindre de mélange (134) en plusieurs secteurs.

10. Système selon la revendication précédente, **caractérisé en ce que** des obstacles (136-137) sont fixés sur les séparateurs (135) du cylindre mélangeur (134).

11. Système selon l'une quelconque des revendications 6 à 10, **caractérisé en ce que** les obstacles (136-137) présentent une surface de contact plane et/ou cylindrique s'opposant à la libre chute des ingrédients dans le cylindre de mélange (134), lesdits obstacles (136-137) étant fixés par au moins une de leurs extrémités sur une face intérieure du cylindre de mélange (134), à différentes hauteurs le long de l'axe longitudinal et s'étendant dans une pluralité de directions.

12. Procédé de dosage et de dépôt d'ingrédients sur un substrat à l'aide d'un système de conservation et de dosage selon l'une quelconque des revendications précédentes prise avec la revendication 2, **caractérisé en ce qu'**il comprend, pour une sélection prédéterminée d'ingrédients à prélever :
- pour chaque compartiment (110) comprenant au moins une partie des ingrédients de ladite sélection :
- déplacement du bac récupérateur (151,152) vers ledit compartiment (110),
- couplage du dispositif de prélèvement et de dosage (150) avec le compartiment (110) de manière à pouvoir prélever des ingrédients dans ledit compartiment ;
- prélèvement de la quantité prédéterminée d'ingrédients contenus dans ledit compartiment et acheminement desdits ingrédients vers le bac récupérateur (151,152) ;
- lorsque tous les ingrédients de ladite sélection ont été prélevés :
- découplage du dispositif de prélèvement et de dosage (150) du compartiment (110) ;
- déplacement du bac récupérateur (151,152) dans la configuration de déchargement ;
- ouverture du bac récupérateur (151,152) afin de déverser les ingrédients qu'il contenait sur le substrat placé sous le bac récupérateur.

13. Utilisation du système selon l'une quelconque des revendications 1 à 11 prise avec la revendication 2 pour la sélection et le dépôt d'ingrédients sur une pâte à pizza abaissée.

14. Automate pour la confection de préparations culinaires comprenant :
- un système de conservation et de dosage d'ingrédients selon l'une quelconque des revendications 1 à 11, lesdits ingrédients étant aptes à être utilisés pour la confection desdites préparations culinaires ;
- un dispositif de cuisson de préparations culinaires ;
- un système de manutention agencé pour pouvoir introduire un support à une préparation culinaire dans le système de conservation et de dosage et pour pouvoir transférer la préparation culinaire du système de conservation et de dosage vers le dispositif de cuisson ;
- une unité de traitement programmée pour commander ledit automate de manière à confectionner une préparation culinaire selon une recette prédéterminée.

## Patentansprüche

1. System zum Aufbewahren und Dosieren von Zutaten, enthaltend:
- eine Aufbewahrungskammer (101) mit einer Anordnung von Fächern (110), die dazu vorgesehen sind, Zutaten zu lagern,
- eine Vorrichtung (150) zum Entnehmen und Dosieren der Zutaten, die dazu vorgesehen ist, nacheinander aus jedem der Fächer (110) eine vorbestimmte Menge an Zutaten zu entnehmen,
**dadurch gekennzeichnet, dass** die Vorrichtung (150) zum Entnehmen und Dosieren der Zutaten das Folgende aufweisen:
- einen Auffangbehälter (151, 152), der dazu vorgesehen ist, die jedem Fach entnommenen Zutaten vorübergehend und in aufeinanderfolgenden Schichten zu lagern,
- einen steuerbaren Fördermechanismus, der dazu vorgesehen ist, den Auffangbehälter (151, 152) lotrecht zu jedem Fach (110) zu verlagern, so dass die dem Fach (110) entnommenen Zutaten in den Auffangbehälter (151, 152) fallen,
- eine Steuereinheit, die zum Steuern des Fördermechanismus und der Entnahme- und Dosiervorrichtung (150) programmiert ist,
**und dadurch, dass**
- die Entnahme- und Dosiervorrichtung (150) enthält:
- ein Extraktionselement (182), das dazu vorgesehen ist, nacheinander mit jedem Fach (110) so zusammenwirken zu können, dass ein Teil der Zutaten extrahiert wird, die in dem Fach (110) enthalten sind, mit dem das Extraktionselement zusammenwirkt;
- ein Antriebsglied, das dazu vorgesehen ist, das Extraktionselement (182) betätigen zu können, wenn es mit einem der Fächer zusammenwirkt;
wobei die Entnahme- und Dosiervorrichtung (150) dazu ausgelegt ist, zumindest zwei Stellungen einnehmen zu können, und zwar:
• eine sogenannte Kopplungsstellung, in welcher das Extraktionselement mit einem der Fächer (110) gekoppelt ist, um daraus einen Teil der Zutaten zum Auffangbehälter (151, 152) hin zu extrahieren;
• eine sogenannte Entkopplungsstellung, in welcher das Extraktionselement von jedem Fach (110) entkoppelt ist, so dass die Entnahme- und Dosiervorrichtung (150) sich zu einem weiteren Fach (110) und/oder zur Entladestellung hin verlagern kann,
**oder dadurch, dass**
- jedes Fach das Folgende aufweist:
- ein Extraktionselement (182), das dazu vorgesehen ist, einen Teil der Zutaten entnehmen zu können, die in dem Fach (110) enthalten sind;
- ein Antriebsglied, das dazu vorgesehen ist, das Extraktionselement betätigen zu können;
wobei die Entnahme- und Dosiervorrichtung (150) dazu ausgelegt ist, zumindest zwei Stellungen einnehmen zu können, und zwar:
• eine sogenannte Kopplungsstellung, in welcher der Auffangbehälter (151, 152) lotrecht zu einem der Fächer (110) platziert ist, so dass die extrahierten Zutaten aufgefangen werden können;
• eine sogenannte Entkopplungsstellung, in welcher die Entnahme- und Dosiervorrichtung (150) dazu geeignet ist, sich zu einem weiteren Fach (110) und/oder zur Entladestellung hin zu verlagern,
**oder dadurch, dass**
- jedes Fach (110) ein Extraktionselement (182) enthält, das dazu vorgesehen ist, einen Teil der Zutaten entnehmen zu können, die in dem Fach (110) enthalten sind;
- die Entnahme- und Dosiervorrichtung (150) ein Antriebsglied enthält, das dazu vorgesehen ist, nacheinander mit jedem Fach zusammenwirken zu können, so dass das Extraktionselement (182) des Fachs betätigt werden kann, mit dem es zusammenwirkt;
wobei die Entnahme- und Dosiervorrichtung (150) dazu ausgelegt ist, zumindest zwei Stellungen einnehmen zu können, und zwar:
• eine sogenannte Kopplungsstellung, in welcher das Antriebsglied mit dem Extraktionselement eines der Fächer (110) zusammenwirkt, so dass das Extraktionselement des Fachs betätigt werden kann und ein Teil der Zutaten dem Fach zum Auffangbehälter (151, 152) hin entnommen werden kann;
• eine sogenannte Entkopplungsstellung, in welcher das Antriebsglied von jedem Extraktionselement entkoppelt ist, so dass die Entnahme- und Dosiervorrichtung (150) sich zu einem weiteren Fach (110) und/oder zur Entladestellung hin verlagern kann.

2. System nach dem vorangehenden Anspruch, **dadurch gekennzeichnet, dass** der Fördermechanismus ferner dazu vorgesehen ist, den Auffangbehälter (151, 152) in eine Entladestellung verlagern zu können, in welcher der Auffangbehälter lotrecht zu einem Substrat ist, wobei der Auffangbehälter auch dazu vorgesehen ist, die entnommenen Zutaten auf das Substrat ablegen zu können.

3. System nach Anspruch 1 oder 2, **dadurch gekennzeichnet, dass** das Extraktionselement (182) zumindest einen Mechanismus vom Typ Schneckengetriebe enthält, wobei der Mechanismus eine Schnecke enthält, deren Geometrie und Drehzahl es gestatten, die Menge und den Exktrationsdurchsatz der Zutaten zu steuern.

4. System nach einem der Ansprüche 1 bis 3, **dadurch gekennzeichnet, dass** die Vorrichtung (150) zum Entnehmen und Dosieren von Zutaten ferner eine Vorrichtung (160) zum Messen des Gewichts (160) und/oder des Volumens der Zutaten bei der Entnahme enthält, wobei die Steuereinheit dazu programmiert ist, die Entnahme der Zutaten aus einem Fach (110) anzuhalten, wenn die vorbestimmte Menge an Zutaten entnommen wurde.

5. System nach einem der vorangehenden Ansprüche in Kombination mit Anspruch 2, **dadurch gekennzeichnet, dass** es eine Verteilvorrichtung (130) enthält, die dazu geeignet ist, sich in einer Zwischenposition zwischen dem Auffangbehälter (151, 152) und dem Substrat zu befinden, wenn der Auffangbehälter in der Entladestellung ist, und so angeordnet ist, dass sie eine homogene und willkürliche Verteilung der entnommenen Zutaten auf dem Substrat gestattet.

6. System nach Anspruch 5, **dadurch gekennzeichnet, dass** die Zutatenverteilvorrichtung (130) einen Mischzylinder (134) enthält, wobei eine Längsachse des Mischzylinders (134) senkrecht zur Oberfläche des Substrats verläuft, wobei der Mischzylinder (134) zwischen einem oberen Ende und einem unteren Ende Hindernisse (136 - 137) aufweist, die dazu vorgesehen sind, sich dem freien Fall der Zutaten entgegenzusetzen, so dass eine zufällige Seitenverlagerung der Zutaten erzeugt wird, um sie wahllos und homogen auf der Oberfläche des Substrats zu verteilen.

7. System nach dem vorangehenden Anspruch, **dadurch gekennzeichnet, dass** die Zutatenverteilvorrichtung (130) ferner eine erste Verteilstufe (133) enthält, die dazu vorgesehen ist, die aus dem Auffangbehälter (151, 152) stammenden Zutaten radial um die Längsachse zu streuen, wobei die erste Verteilstufe oberhalb oder im oberen Teil von dem Mischzylinder (134) liegt.

8. System nach Anspruch 7, **dadurch gekennzeichnet, dass** die erste Verteilstufe (133) eine konische Fläche aufweist, die sich seitlich innerhalb des Mischzylinders (134) erstreckt, wobei die erste Verteilstufe (133) koaxial mit dem Mischzylinder (134) ausgerichtet ist, und **dadurch, dass zumindest** ein Hindernis (136 - 137) an den Mischzylinder (134) in Verlängerung der konischen Fläche befestigt ist, so dass eine Zutat, die entlang der ersten Verteilstufe (133) herunterfällt, über die konische Fläche hinaus auf das zumindest eine Hindernis (136 - 137) geschleudert wird.

9. System nach einem der Ansprüche 6 bis 8, **dadurch gekennzeichnet, dass** der Mischzylinder (134) ferner Separatoren (135) enthält, die den Mischzylinder (134) longitudinal in mehrere Sektoren unterteilen.

10. System nach dem vorangehenden Anspruch, **dadurch gekennzeichnet, dass** die Hindernisse (136 - 137) an den Separatoren (135) des Mischzylinders (134) befestigt sind.

11. System nach einem der Ansprüche 6 bis 10, **dadurch gekennzeichnet, dass** die Hindernisse (136 - 137) eine ebene und/oder zylindrische Kontaktfläche aufweisen, die sich dem freien Fall der Zutaten in den Mischzylinder (134) entgegensetzt, wobei die Hindernisse (136 - 137) mit zumindest einem ihrer Enden an eine Innenseite des Mischzylinders (134) auf unterschiedlichen Höhen entlang der Längsachse befestigt sind und sich in mehreren Richtungen erstrecken.

12. Verfahren zum Dosieren und Aufbringen von Zutaten auf ein Substrat mittels eines Aufbewahrungs- und Dosiersystems nach einem der vorangehenden Ansprüche in Kombination mit Anspruch 2, **dadurch gekennzeichnet, dass** es zum vorbestimmten Auswählen von zu entnehmenden Zutaten die folgenden Schritte umfasst:
- für jedes zumindest einen Teil der Zutaten der Auswahl enthaltendes Fach (110):
- Verlagern des Auffangbehälters (151, 152) zum Fach (110) hin,
- Koppeln der Entnahme- und Dosiervorrichtung (150) mit dem Fach (110), so dass Zutaten aus dem Fach entnommen werden können;
- Entnehmen der vorbestimmten Menge an in dem Fach enthaltenen Zutaten und Zuführen der Zutaten zu dem Auffangbehälter (151, 152);
- dann, wenn sämtliche Zutaten der Auswahl entnommen wurden:
- Entkoppeln der Entnahme- und Dosiervorrichtung (150) vom Fach (110);
- Verlagern des Auffangbehälters (152, 151) in die Entladestellung;
- Öffnen des Auffangbehälters (151, 152), um die in diesem enthaltenen Zutaten auf das unter dem Auffangbehälter platzierte Substrat zu streuen.

13. Verwendung des Systems nach einem der Ansprüche 1 bis 11 in Kombination mit Anspruch 2 zum Auswählen und Aufbringen von Zutaten auf einen ausgebreiteten Pizzateig.

14. Automat zum Herstellen von Nahrungsmittelzubereitungen, enthaltend:
- ein System zum Aufbewahren und Dosieren von Zutaten nach einem der Ansprüche 1 bis 11, wobei die Zutaten dazu geeignet sind, zur Herstellung der Nahrungsmittelzubereitungen verwendet zu werden;
- eine Vorrichtung zum Garen von Nahrungsmittelzubereitungen;
- ein Handhabungssystem, das dazu vorgesehen ist, eine Unterlage für eine Nahrungsmittelzubereitung in das Aufbewahrungs- und Dosiersystem einführen zu können und um die Nahrungsmittelzubereitung von dem Aufbewahrungs- und Dosiersystem zur Garvorrichtung überführen zu können;
- eine Verarbeitungseinheit, die dazu programmiert ist, den Automaten derart zu steuern, dass eine Nahrungsmittelzubereitung nach einem vorbestimmten Rezept hergestellt wird.

## Claims

1. System for preserving and metering ingredients comprising:
- a preservation chamber (101) comprising a set of compartments (110) arranged to store ingredients,
- a device (150) for picking and metering the ingredients, arranged so that it can successively pick a predetermined quantity of ingredients from each of the compartments (110),
**characterized in that** the device (150) for picking and metering the ingredients comprises:
- a collecting vessel (151, 152) arranged to temporarily store, in successive layers, the ingredients picked from each compartment,
- a controlled conveying mechanism, arranged so that it can move the collecting vessel (151, 152) in line with each compartment (110) so that the picked ingredients from said compartment (110) fall into the collecting vessel (151, 152),
- a control unit, programmed to control the conveying mechanism and the picking and metering device (150)
**and in that:**
- the picking and metering device (150) comprises:
- an extraction element (182) arranged so that it can engage successively with each compartment (110) in order to extract some of the ingredients contained in the compartment (110) with which the extraction element is engaged;
- a motor unit arranged so that it can actuate the extraction element (182) when it engages with one of said compartments;
said picking and metering device (150) being configured so that it can adopt at least two configurations:
• a configuration known as coupled configuration, in which the extraction element is coupled to one of the compartments (110) in order to extract some of the ingredients to the collecting vessel (151, 152);
• a configuration known as uncoupled configuration, in which the extraction element is uncoupled from each compartment (110) in order to allow the picking and metering device (150) to be able to move to another compartment (110) and/or to the unloading configuration,
**or in that:**
- each compartment comprises:
- an extraction element (182) arranged so that it can pick some of the ingredients contained in said compartment (110);
- a motor unit arranged so that it can actuate the extraction element;
the picking and metering device (150) is configured so that it can have at least two configurations:
• a configuration known as coupled configuration, in which the collecting vessel (151, 152) is placed in line with one of the compartments (110) in such a way that it can collect the extracted ingredients;
• a configuration known as uncoupled configuration, in which the picking and metering device (150) is suitable for moving to another compartment (110) and/or to the unloading configuration,
**or in that:**
- each compartment (110) comprises an extraction element (182) arranged so that it can pick some of the ingredients contained in said compartment (110);
- the picking and metering device (150) comprises a motor unit arranged so that it can engage successively with each compartment so that it can actuate the extraction element (182) of the compartment with which it is engaged;
said picking and metering device (150) being configured so that it can have at least two configurations:
• a configuration known as coupled configuration, in which the motor unit is coupled to the extraction element of one of the compartments (110) so that it can actuate the extraction element of said compartment and pick some of the ingredients from said compartment to the collecting vessel (151, 152);
• a configuration known as uncoupled configuration, in which the motor unit is uncoupled from each extraction element in order to allow the picking and metering device (150) to move to another compartment (110) and/or to the unloading configuration.

2. System according to the preceding claim, **characterized in that** the conveying mechanism is also arranged so that it can move the collecting vessel (151, 152) to a unloading configuration, in which the collecting vessel is situated in line with a substrate, the collecting vessel also being arranged so that it can load the picked ingredients on the substrate.

3. System according to claim 1 or 2, **characterized in that** the extraction element (182) comprises a mechanism of the auger type, the mechanism comprising an auger the geometry and speed of rotation of which make it possible to control the quantity and rate of extraction of the ingredients.

4. System according to any one of claims 1 to 3, **characterized in that** the device (150) for picking and metering ingredients also comprises a device (160) for measuring the weight and/or volume of the ingredients during picking, the control unit being programmed to stop the picking of the ingredients from a compartment (110) when the predetermined quantity of ingredients has been picked.

5. System according to any one of the preceding claims in combination with claim 2, **characterized in that** it comprises a distribution device (130) suitable for being situated in an intermediate position between the collecting vessel (151, 152) and the substrate when the collecting vessel is in the unloading configuration, and arranged in such a way as to allow a random and even distribution of the picked ingredients on said substrate.

6. System according to claim 5, **characterized in that** the device for the distribution of ingredients (130) comprises a mixing cylinder (134), a longitudinal axis of the mixing cylinder (134) being perpendicular to the surface of the substrate, the mixing cylinder (134) comprising, between an upper end and a lower end, obstacles (136-137) arranged to obstruct the free-fall of the ingredients, in such a way as to generate random lateral movement of the ingredients to distribute them randomly and evenly on the surface of the substrate.

7. System according to the preceding claim, **characterized in that** the device for the distribution of ingredients (130) also comprises a first distribution stage (133) arranged to disperse the ingredients coming from the collecting vessel (151, 152) radially around the longitudinal axis, said first distribution stage being situated above or in the upper portion of the mixing cylinder (134).

8. System according to claim 7, **characterized in that** the first distribution stage (133) comprises a conical surface that extends laterally inside the mixing cylinder (134), said first distribution stage (133) being aligned co-axially with the mixing cylinder (134), **and in that** at least one obstacle (136-137) is secured to said mixing cylinder (134) in the prolongation of said conical surface, so that an ingredient falling the length of the first distribution stage (133) is projected beyond the conical surface onto said at least one obstacle (136-137).

9. System according to any one of claims 6 to 8, **characterized in that** the mixing cylinder (134) also comprises separators (135) longitudinally dividing said mixing cylinder (134) into several sectors.

10. System according to the preceding claim, **characterized in that** the obstacles (136-137) are secured to the separators (135) of the mixing cylinder (134).

11. System according to any one of claims 6 to 10, **characterized in that** the obstacles (136-137) have a flat and/or cylindrical contact surface that obstructs the free-fall of the ingredients in the mixing cylinder (134), said obstacles (136-137) being secured by at least one of their ends to an inner surface of the mixing cylinder (134), at different heights along the longitudinal axis and extending in a plurality of directions.

12. Method for metering and placing ingredients on a substrate using a preservation and metering system according to any one of the preceding claims in combination with claim 2, **characterized in that** it comprises, for a predetermined selection of ingredients to be picked:
- for each compartment (110) comprising at least some of the ingredients of said selection:
- moving the collecting vessel (151, 152) towards said compartment (110);
- coupling the picking and metering device (150) with the compartment (110) so that ingredients can be picked from said compartment;
- picking the predetermined quantity of ingredients contained in said compartment and conveying said ingredients to the collecting vessel (151, 152);
- when all of the ingredients of said selection have been picked:
- uncoupling the picking and metering device (150) from the compartment (110);
- moving the collecting vessel (151, 152) into the unloading configuration;
- opening the collecting vessel (151, 152) in order to dispense the ingredients that it contained onto the substrate placed below the collecting vessel.

13. Use of the system according to any one of claims 1 to 11 in combination with claim 2 for the selection and loading of ingredients on a sheeted pizza dough.

14. Automated machine for making culinary preparations comprising:
- a system for preserving and metering ingredients according to any one of claims 1 to 11, said ingredients being suitable for being used to prepare said culinary preparations;
- a device for cooking culinary preparations;
- a handling system arranged so that it can introduce a support for a culinary preparation into the preservation and metering system and transfer the culinary preparation from the preservation and metering system to the cooking device;
- a processing unit programmed to control said automated machine so as to prepare a culinary preparation according to a predetermined recipe.
